# EUROPÄISCHE PATENTSCHRIFT

(11) **EP 3 400 385 B1**
(45) Veröffentlichungstag und Bekanntmachung des Hinweises auf die Patenterteilung: **05.05.2021**
(21) Anmeldenummer: 17700064.3
(22) Anmeldetag: 04.01.2017
(51) Int. Cl.: F03D 13/10, B66C 1/10, F03D 80/00

(54) **HEBEVORRICHTUNG ZUM HEBEN EINER KOMPONENTE EINER WINDENERGIEANLAGE UND VERFAHREN ZUM MONTIEREN VON KOMPONENTEN EINER WINDENERGIEANLAGE**
LIFTING DEVICE FOR LIFTING A COMPONENT OF A WIND TURBINE AND METHOD FOR ASSEMBLING COMPONENTS OF A WIND TURBINE
DISPOSITIF DE LEVAGE POUR LEVER UN ÉLÉMENT D'UNE ÉOLIENNE ET PROCÉDÉ POUR MONTER DES ÉLÉMENTS D'UNE ÉOLIENNE

(30) Priorität: 08.01.2016 DE 102016200160
(43) Veröffentlichungstag der Anmeldung: 14.11.2018
(73) Patentinhaber: Wobben Properties GmbH, 26607 Aurich (DE)
(72) Erfinder: MEYER, Wolfgang, 26639 Wiesmoor (DE); LÜLKER, Frank, 26603 Aurich (DE); BEECKMANN, Sascha, 26802 Veenhusen (DE)
(74) Vertreter: Eisenführ Speiser
(86) Internationale Anmeldenummer: PCT/EP2017/050146
(87) Internationale Veröffentlichungsnummer: WO 2017/118663

(56) Entgegenhaltungen:
- EP-A2- 2 118 483
- WO-A2-2011/064659
- DE-U1-202012 005 409

## Beschreibung

Die vorliegende Erfindung betrifft eine Hebevorrichtung zum Heben einer Komponente einer Windenergieanlage sowie ein Verfahren zum Montieren von Komponenten einer Windenergieanlage.

Alle Teile der Windenergieanlage, welche in oder an dem Rotor der Windenergieanlage vorzusehen sind, müssen, nachdem der Turm aufgebaut worden ist, mittels eines Krans nach oben transportiert bzw. gehoben werden. Dieser Transport ist jedoch kostenintensiv und abhängig von den vorherrschenden Witterungsbedingungen.

In der prioritätsbegründenden deutschen Patentanmeldung hat das Deutsche Patent- und Markenamt die folgenden Dokumente recherchiert: DE 10 2009 011 478 A1 und DE 10 2011 003 164 A1. Zudem ist in dem Dokument DE 20 2012 005 409 U eine Hebevorrichtung zum Heben von Paletten offenbart.

Daher ist es eine Aufgabe der vorliegenden Erfindung, eine Hebevorrichtung zum Heben von Komponenten einer Windenergieanlage sowie ein Verfahren zum Montieren von Komponenten einer Windenergieanlage vorzusehen, welche eine schnellere Montage der Komponenten der Windenergieanlage ermöglicht.

Diese Aufgabe wird durch eine Hebevorrichtung zum Heben einer Komponente einer Windenergieanlage nach Anspruch 1 sowie durch ein Verfahren zur Montage von Komponenten einer Windenergieanlage nach Anspruch 6 und nach Anspruch 7 gelöst.

Somit wird eine Hebevorrichtung zum Heben von Komponenten einer Windenergieanlage vorgesehen. Die Hebevorrichtung weist mindestens eine erste und zweite Befestigungseinheit jeweils zum Befestigen einer Komponente einer Windenergieanlage und einen ersten Arm mit einer Mehrzahl von Bohrungen auf. Die Bohrungen weisen unterschiedliche Winkel zu der ersten und zweiten Befestigungseinheit auf.

Gemäß einem Aspekt der vorliegenden Erfindung ist der erste Arm zumindest teilweise in einem Winkel zur ersten und zweiten Befestigungseinheit angeordnet.

Gemäß einem weiteren Aspekt der vorliegenden Erfindung ist ein Schlitten vorgesehen, welcher insbesondere entlang des ersten Armes in einer der Mehrzahl der Bohrungen feststellbar ist. Der Schlitten weist eine Lasche oder Öse zur Aufnahme eines Kranhakens auf.

Gemäß der vorliegenden Erfindung weist die Hebevorrichtung einen zweiten und dritten Arm auf, an welchen jeweils ein erster Teil der ersten und zweiten Befestigungseinheit vorgesehen werden kann. Die Hebevorrichtung weist ferner eine Bodeneinheit auf, welche zwei zweite Teile der ersten und zweiten Befestigungseinheit aufweist. Die zwei zweiten Teile der Befestigungseinheiten sind verschwenkbar an der Bodeneinheit vorgesehen und können eine Betriebsposition und eine Transportposition aufweisen.

Gemäß einem weiteren Aspekt der vorliegenden Erfindung weist der erste Arm einen ersten geraden und einen zweiten abgewinkelten Abschnitt auf.

Gemäß einem weiteren Aspekt der vorliegenden Erfindung ist die erste und zweite Befestigungseinheit im Wesentlichen parallel zueinander angeordnet.

Eine nicht beanspruchte Ausführung betrifft eine Hebevorrichtung zum Heben von Komponenten einer Windenergieanlage. Die Hebevorrichtung weist mindestens eine erste Befestigungseinheit zum Befestigen einer Komponente einer Windenergieanlage und eine zweite Befestigungseinheit zum Befestigen einer weiteren Komponente der Windenergieanlage auf. Die erste Befestigungseinheit weist eine erste Öse für einen Kranhaken und die zweite Befestigungseinheit weist eine zweite Öse für einen Kranhaken auf. Die Hebevorrichtung weist ferner einen ersten Arm in einem Winkel zu der ersten und zweiten Befestigungseinheit mit einer dritten Öse für einen Kranhaken auf. Die erste und zweite Befestigungseinheit ist in einem Winkel von < 90°, insbesondere im Wesentlichen 60° zueinander angeordnet.

Eine nicht beanspruchte Ausführung betrifft eine Hebevorrichtung zum Heben von Komponenten einer Windenergieanlage, welche mindestens eine erste und zweite Befestigungseinheit jeweils zum Befestigen einer Komponente einer Windenergieanlage aufweist. Die erste und zweite Befestigungseinheit sind im Wesentlichen parallel zueinander angeordnet. Die Hebevorrichtung weist ferner einen Arm mit einer Öse für einen Kranhaken auf, wobei der Arm verschwenkbar bezüglich der ersten und zweiten Befestigungseinheit vorgesehen ist.

Die Erfindung betrifft ebenfalls ein Verfahren zur Montage von Komponenten einer Windenergieanlage an einer Windenergieanlage mittels einer oben beschriebenen Hebevorrichtung. Mindestens eine erste und zweite Komponente einer Windenergieanlage wird an der mindestens ersten und zweiten Befestigungseinheit der Hebevorrichtung befestigt. Der Schlitten wird in einer Bohrung arretiert, sodass ein an dem Schlitten befestigter Kranhaken im Wesentlichen senkrecht zur ersten und zweiten Befestigungseinheit ausgerichtet ist. Eine der Komponenten der Windenergieanlage, welche an der ersten oder zweiten Befestigungseinheit befestigt ist, wird an einem ersten Rotornabenanschluss befestigt, welcher sich in der 3 Uhr Position befindet. Die Komponente der Windenergieanlage wird von der ersten und zweiten Befestigungseinheit gelöst und der Schlitten wird verfahren und in einer weiteren Bohrung arretiert, welche sich zwischen der ersten und zweiten Befestigungseinheit befindet. Die Hebevorrichtung wird um einen Winkeln nach außen verschwenkt, angehoben, gedreht und verfahren, sodass die zweite Komponente der Windenergieanlage, welche noch an der ersten oder zweiten Befestigungseinheit befestigt ist, an einem zweiten Rotorblattanschluss befestigt werden kann. Die an der Hebevorrichtung befestigte Komponente der Windenergieanlage wird an dem zweiten Rotornabenanschluss befestigt. Die Komponente der Windenergieanlage wird von der ersten und zweiten Befestigungseinheit gelöst.

Weitere Ausgestaltungen der Erfindung sind Gegenstand der Unteransprüche. Vorteile und Ausführungsbeispiele der Erfindung werden nachstehend unter Bezugnahme auf die Zeichnungen näher erläutert.
- Fig. 1: zeigt eine perspektivische Ansicht einer Windenergieanlage,
- Fig. 2: zeigt eine perspektivische Ansicht einer Ausführungsform einer erfindungsgemäßen Hebevorrichtung,
- Fig. 3: zeigt eine perspektivische Schnittansicht einer Ausführungsform eines Schlittens der erfindungsgemäßen Hebevorrichtung der Fig. 2,
- Fig. 4: zeigt eine perspektivische Ansicht einer Bolzensicherung für den Schlitten aus Fig. 3,
- Fig. 5: zeigt eine Unteransicht einer Transportlage der erfindungsgemäßen Hebevorrichtung der Fig. 2,
- Fig. 6a und 6b: zeigen vergrößerte perspektivische Ansichten der erfindungsgemäßen Hebevorrichtung der Fig. 2 in Transportlage,
- Fig. 7a und 7b: zeigen vergrößerte Ansichten der erfindungsgemäßen Hebevorrichtung der Fig. 2 in Transportlage,
- Fig. 8a bis 8u: zeigen Ansichten von Verfahrensschritten des Montageverfahrens gemäß einem ersten Ausführungsbeispiel,
- Fig. 9a bis 9c: zeigen verschiedene Ansichten bei der Montage von Komponenten einer Windenergieanlage gemäß einem zweiten Ausführungsbeispiel,
- Fig. 10: zeigt eine schematische Darstellung einer Hebevorrichtung mit einer einzelnen Rotorblattanschlusseinheit gemäß einem dritten Ausführungsbeispiel,
- Fig. 11a bis 11g: zeigen jeweils verschiedene Ansichten der Hebevorrichtung bei einer Montage von Komponenten einer Windenergieanlage gemäß einem dritten Ausführungsbeispiel,
- Fig. 12a bis 12f: zeigen verschiedene Ansichten einer Hebevorrichtung zur Montage von Komponenten einer Windenergieanlage gemäß einem vierten Ausführungsbeispiel, und
- Fig. 13a bis 13f: zeigen verschiedene Schritte bei der Montage einer Komponente einer Windenergieanlage gemäß einem fünften Ausführungsbeispiel.

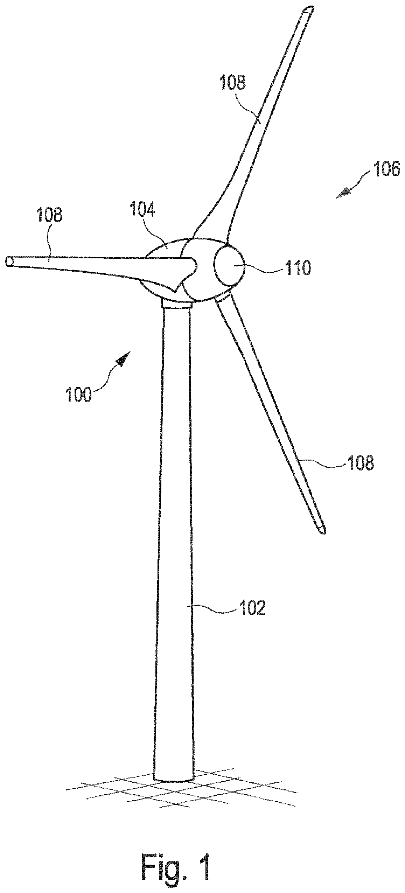

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an. Die Rotorblätter 108 können beispielsweise mittels eines Blattanschlusses oder Blattadapters an einer Rotornabe der Windenergieanlage befestigt werden. Dir Rotornabe kann drei Rotornabenanschlüsse aufweisen. Die Rotorblätter der Windenergieanlage können bspw. mittels eines Pitchlagers gepitcht werden, d. h. sie können um ihre Längsachse gedreht werden.

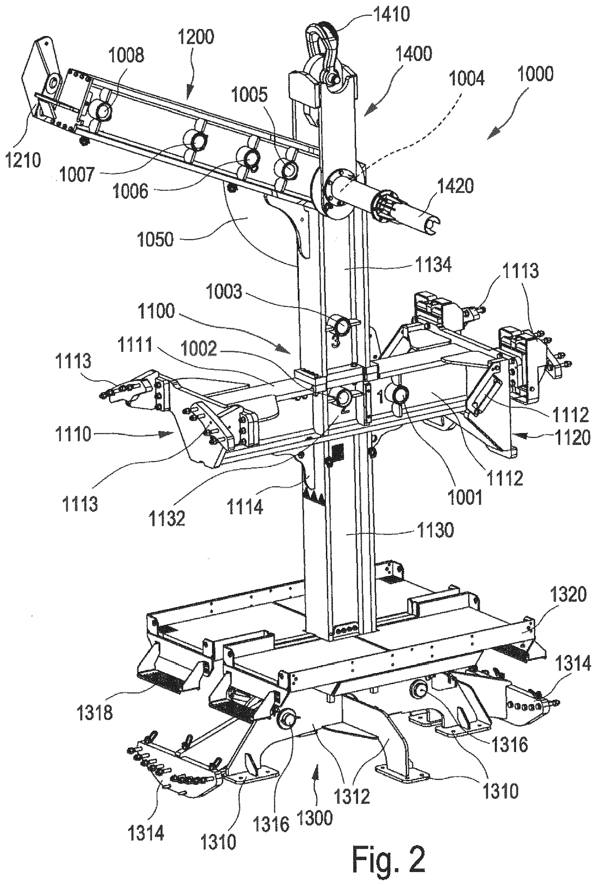

Fig. 2 zeigt eine erfindungsgemäße Hebevorrichtung 1000, die zum Errichten der Windenergieanlage 100 oder zur Montage von Komponenten einer Windenergieanlage, weiche vorzugsweise in dem Rotor oder in der Gondel zu montieren sind, einsetzbar ist. Die erfindungsgemäße Hebevorrichtung 1000 weist im Wesentlichen einen ersten Abschnitt 1100 und einen zweiten Abschnitt 1200 auf. Steht die Vorrichtung 100 auf einem Untergrund, ist der erste Abschnitt 1100 im Wesentlichen vertikal bzgl. der Bodenfläche ausgerichtet, während der zweite Abschnitt 1200 in einem Winkel 1150 zu dem ersten Abschnitt 1100 angeordnet ist.

Der erste Abschnitt 1100 ist im Wesentlichen aus einem sogenannten I-Träger (bzw. Doppel-T-Träger) gebildet. An dem ersten Abschnitt 1100 sind eine erste Befestigungseinheit 1110 und eine zweite Befestigungseinheit 1120 angeordnet. Die Befestigungseinheiten 1110 und 1120 dienen dem Befestigen von verschiedenen Komponenten der Windenergieanlage 100 während des Hebens auf eine vorgesehene Höhe und während des Montierens oder Demontierens an der Windenergieanlage. Vorzugsweise sind die erste und die zweite Befestigungseinheit 1110, 1120 an gegenüberliegenden Seiten des erstens Abschnitts 1100 angeordnet. Die Befestigungseinheiten 1110, 1120 sind jeweils an einem Ende eines jeweiligen von dem ersten Abschnitt 1100 abragenden Arms 1111, 1112 angeordnet. Die Arme 1111, 1112 sind ebenfalls im Wesentlichen aus einem I-Träger gebildet und auf gleicher Höhe angeordnet. Die Befestigungseinheiten 1110, 1120 weisen obere Befestigungsplatten 1113 auf, an denen die jeweilige zu befestigende Komponente zu befestigen ist. Die Befestigungseinheiten 1110 und 1120 können unterschiedlich ausgebildet sein. In der gezeigten Ausführungsform weist die Befestigungseinheit 1120 zusätzlich eine Aufnahme 1122 für bspw. eine Rundschlinge auf, auf die nachfolgend noch eingegangen wird.

An den ersten Abschnitt 1100 schließt sich an einem oberen Ende der zweite Abschnitt 1200 an. Der zweite Abschnitt 1200 ragt in einem Winkel 1150 von dem ersten Abschnitt 1100 ab. Der Winkel kann dabei beliebig gewählt werden. Für einen nachfolgend beschriebenen Anwendungsbereich der Vorrichtung 1000 hat sich ein Winkel 1150 von ungefähr 120° (bzw. 60°) zwischen der Orientierung des ersten Abschnitts 1100 und des zweiten Abschnitts 1200 als vorteilhaft erwiesen. Auch der zweite Abschnitt 1200 ist im Wesentlichen durch einen I-Träger gebildet. Zwischen dem ersten Abschnitt 1100 und dem zweiten Abschnitt 1200 ist ein Versteifungswinkel eingefügt, der die Steifigkeit der Vorrichtung 1000 erhöht. An einem äußeren Ende des zweiten Abschnitts 1200 ist ein Fußteil 1210 angeordnet.

An einem anderen Ende des ersten Abschnitts 1100 ist ein Bodenabschnitt 1300 angeordnet. Der Bodenabschnitt 1300 bildet z.B. einen kreuzförmigen Rahmen, der aus mindestens vier Fußarmen 1312 gebildet ist. Während des Befestigens der Komponenten an den Befestigungseinheiten 1110, 1120 ruht bzw. steht die Vorrichtung 1000 auf Füßen 1310, die an dem Bodenabschnitt 1300 angeordnet sind.

An gegenüberliegenden Fußarmen 1312 sind untere Befestigungsplatten 1314 der Befestigungseinheiten 1110, 1120 angeordnet. Die unteren Befestigungsplatten 1314 sind dabei auf den gleichen Seiten wie die Befestigungseinheiten 1110 und 1120 angeordnet. Die unteren Befestigungsplatten 1314 sind klappbar ausgebildet. Dadurch können die Befestigungsanordnungen 1314 während des Transports der Vorrichtung 1000 eingeklappt werden, wodurch der Transportraum verkleinert wird. Darüber hinaus lässt sich die Vorrichtung 1000 bezüglich der daran befestigten Komponente auch kippen, wenn die Komponente nur an der unteren Befestigungsplatte befestigt ist. Dazu sind die Fußarme 1312, an denen die unteren Befestigungsplatten 1314 angeordnet sind, jeweils zweiteilig ausgebildet, sodass zwischen den jeweiligen zwei Teilen des entsprechenden Fußarms 1312 ein Mechanismus 1316 zum Klappen angeordnet ist. Der Klappmechanismus wird im Wesentlichen durch einen Bolzen realisiert, an dem die unteren Befestigungsplatten 1314 drehbar gelagert sind.

An dem ersten Abschnitt 1100 ist im Bereich des Bodenabschnitts 1300 ein Arbeitspodest 1320 angeordnet. Auf dem Arbeitspodest 1320 können Arbeiter während der Montage der zu befestigenden Teile an der Windenergieanlage 100 stehen. Das Arbeitspodest 1320 bietet eine Arbeitsplattform, die vollständig um den ersten Abschnitt 1100 herum begehbar ist. Zum einfacheren Erreichen des Arbeitspodests 1320 sind an den Seiten Trittstufen 1318 angebracht.

Der erste Abschnitt 1100 ist aus mehreren Teilen gefertigt. Ein erstes Teil 1130, das aus einem I-Träger gebildet ist, verbindet den Bodenabschnitt 1300 mit einem zweiten Teil 1132. Das zweite Teil 1132 ist bspw. über eine Schweißung mit dem ersten Teil 1130 verbunden und im Wesentlichen senkrecht dazu angeordnet. Das zweite Teil 1132 weist auch die Arme 1111, 1112 auf, an denen die oberen Befestigungsplatten 1113 der Befestigungseinheiten 1110 und 1120 angeordnet sind. Versteifungswinkel 1114 zwischen dem ersten und zweiten Teil 1130, 1132 des ersten Abschnitts 1100 erhöhen die Steifigkeit des zweiten Teils 1132. Oberhalb des zweiten Teils 1132, in Verlängerung des ersten Teils 1130, ist ein dritter Teil 1134 des ersten Abschnitts angeordnet, das das zweite Teil 1132 mit dem zweiten Abschnitt 1200 verbindet. Das dritte Teil 1134 kann dabei an dem zweiten Teil 1132 mit einer Mehrzahl von Schrauben angeflanscht sein. Auf diese Weise kann die Vorrichtung 1000 während des Transports weiter zerlegt werden, um Transportplatz zu sparen. Das erste, zweite und dritte Teil 1130, 1132, 1134 kann jedoch auch mit jeder anderen geeigneten Verbindungsart miteinander verbunden werden.

Der erste und zweite Abschnitt 1100, 1200 der Vorrichtung 1000 weisen eine Mehrzahl von Feststellbohrungen 1001 bis 1008 auf. Eine erste Feststellbohrung 1001 ist in dem Arm 1112 des zweiten Teils 1132 des ersten Abschnitts 1100 angeordnet. Eine zweite Festellbohrung 1002 ist in einem Verbindungsbereich des ersten, zweiten und dritten Teils 1130, 1132, 1134 in dem ersten Teil 1130 des ersten Abschnitts 1100 angeordnet. Eine dritte Feststellbohrung 1003 ist in einem oberen Bereich des ersten Abschnitts 1100 in dem dritten Teil 1134 angeordnet. Eine vierte Feststellbohrung 1004 ist an dem oberen Ende des ersten Abschnitts 1100 im Übergang zu dem zweiten Abschnitt 1200 angeordnet. Genauer ist die vierte Feststellbohrung 1004 in einem Schnittpunkt der Längsachse des ersten Abschnitts 1100 mit der Längsachse des zweiten Abschnitts 1200 angeordnet. Eine fünfte, sechste und siebente Feststellbohrung sind entlang des zweiten Abschnitts 1200 in Abständen zueinander angeordnet. Eine achte Feststellbohrung 1008 ist an dem äußeren Ende des zweiten Abschnitts 1200 angeordnet. Die Feststellbohrungen 1001 bis 1008 weisen jeweils einen über einen Steg des I-Trägers hinausragenden Ring auf, der eine Breite bzw. Länge der Feststellbohrung 1001 bis 1008 vergrößert. Der Ring ist mit Versteifungsrippen zwischen Ring und Gurt bzw. Flansch des I-Trägers ausgesteift.

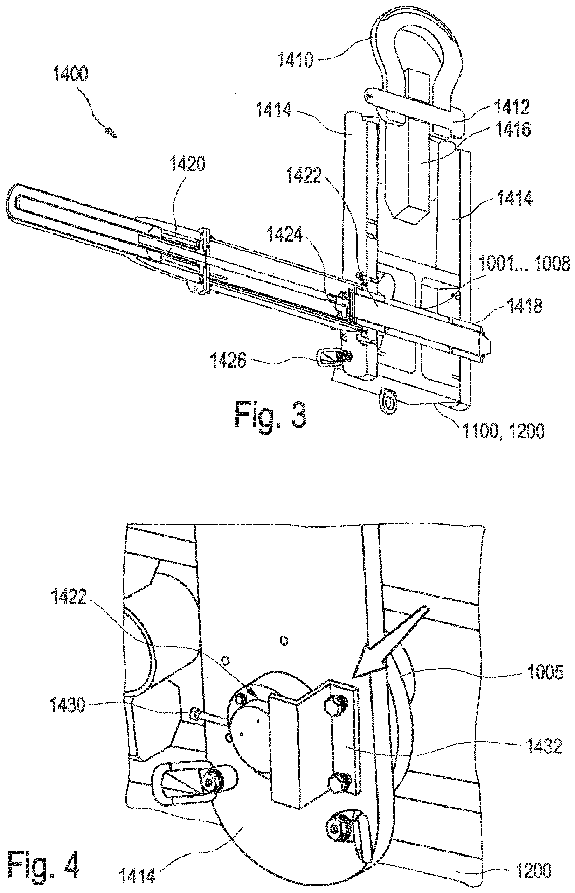

Fig. 3 zeigt eine perspektivische Schnittansicht eines Schlittens der erfindungsgemäßen Hebevorrichtung von Fig. 2. Entlang des ersten und zweiten Abschnitts 1100, 1200 kann ein verfahrbarer Schlitten 1400 angeordnet sein, der in den Feststellbohrungen 1001 bis 1008 feststellbar ist, also verrutschsicher in den Feststellbohrungen 1001 bis 1008 gesichert werden kann. In den Feststellbohrungen 1001 bis 1008 ist der Schlitten 1400 drehbar gelagert. Zum Sichern gegen ein Lösen des Schlittens 1400 in einer der Feststellbohrungen 1001 bis 1008, weist der Schlitten 1400 einen Hydraulikzylinder 1420 auf, der einen Lastbolzen 1422 in der jeweiligen Feststellbohrung 1001 bis 1008 sichert. An dem Schlitten 1400 ist eine Lasche 1410 angeordnet, an die bspw. ein Kranhaken einhakbar ist, um die Vorrichtung 1000 anzuheben.

Die Lasche 1410 ist mit einem Bolzen 1412 an dem Schlitten 1400 befestigt. Dazu weist der Schlitten 1400 zwei Querstege auf, die zwischen Grundkörpern 1414 des Schlittens 1400 angebracht sind. Zwischen den Querstegen ist eine Platte 1416 angebracht, an der die Lasche 1410 angeordnet ist. Die Grundkörper 1414 des Schlittens 1400 verlaufen jeweils zu beiden Seiten des ersten und zweiten Abschnitts 1100, 1200 und weisen eine Aufnahmebohrung 1418 auf, die einen Lastbolzen 1422 aufnimmt. Der Lastbolzen 1422 wird in die Aufnahmebohrungen 1418 und die Feststellbohrungen 1001 bis 1008 des ersten bzw. zweiten Abschnitts 1100, 1200 eingeführt, um den Schlitten 1400 zu sichern. Zum Sichern des Lastbolzens 1422 ist der Hydraulikzylinder 1420 vorgesehen, der an einer Zylinderschraube 1424 angebracht ist, die als sogenannte Positionsfahne dient.

Darüber hinaus ist ein Lastbockgewinde 1426 an einem der Grundkörper 1414 angebracht, um den Schlitten 1400 manuell in Position zu ziehen.

In Fig. 4 ist eine beispielhafte Alternative zu der Hydraulikbolzensicherung aus Fig. 3 dargestellt. Wird der Hydraulikzylinder nicht verwendet, kann eine Bolzensicherung mit einem Sicherungsstift 1430 und einem Sicherungsblech 1432 verwendet werden, um den Lastbolzen 1422 in bspw. der Feststellbohrung 1005 des zweiten Abschnitts 1200 zu sichern. Der Sicherungsstift 1430 ist dabei in den Lastbolzen 1422 seitlich eingeführt. Das Sicherungsblech 1432 ist im Wesentlichen Z-förmig ausgebildet und auf dem Grundkörper 1414 bspw. mit einer Schraubverbindung befestigt.

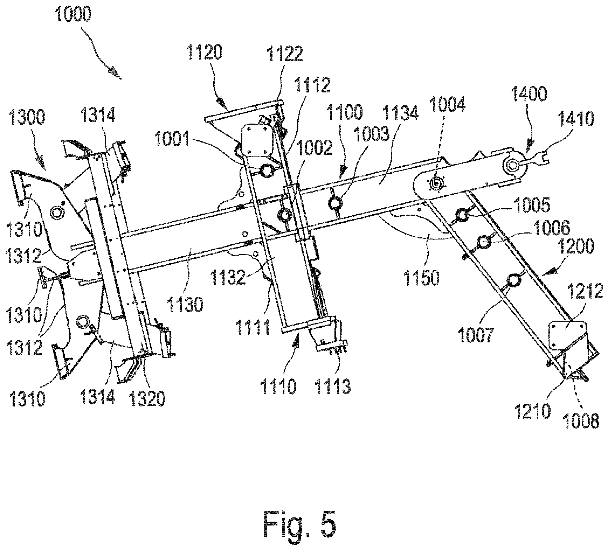

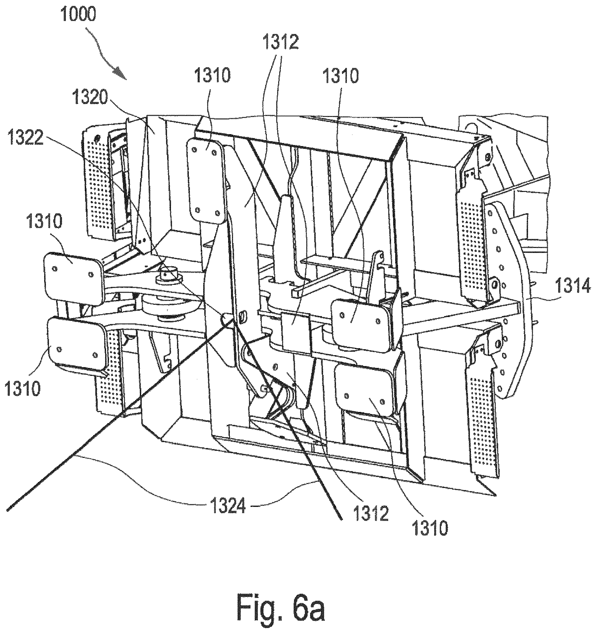

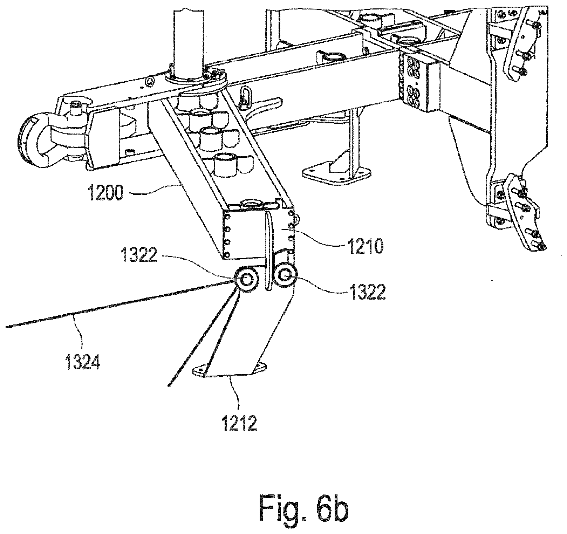

Fig. 5 zeigt eine Unteransicht auf eine Transportlage der Vorrichtung 1000. Im weiteren Sinne stellt Fig. 5 eine Seitenansicht der Vorrichtung 1000 dar und zeigt daher im Wesentlichen die bereits in Fig. 2 beschriebenen Merkmale der Vorrichtung 1000. Während des Transports liegt die Vorrichtung 1000 auf einer Seite. Dabei stützt die Vorrichtung 1000 sich auf einer Seitenfläche des Arbeitspodestes 1320 und auf einen Fuß 1212, der an dem Kopfteil 1210 angeordnet ist. Wie in Fig. 5 ersichtlich, können während des Transports der Vorrichtung 1000 die unteren Befestigungsplatten 1314 der Befestigungseinheiten 1110 1120, die an dem Bodenabschnitt 1300 angeordnet sind, eingeklappt werden. Dazu werden die unteren Befestigungsplatten 1314 im Wesentlichen nach oben geklappt und reichen in einen dafür vorgesehenen Spalt in dem Arbeitspodest 1320, wie auch in Fig. 6a zu erkennen ist. An einem der Fußarme 1312 befindet sich ein sogenannter Anlaschpunkt 1322, an dem ein Befestigungsmittel 1324, bspw. ein Spanngurt, zum Sichern der Vorrichtung 1000 in der Transportposition befestigbar ist. In einer Ausführungsform ist wenigstens ein Fußarm 1312, bspw. der auf die Auflageseite gerichtete Fußarm 1312, ebenfalls hoch geklappt. Weitere Anlaschpunkte 1322 befinden sich u.a. an dem Kopfteil 1210 am äußeren Ende des zweiten Abschnitts 1200 (siehe Fig. 6b), an dem der Fuß 1212 angeordnet ist.

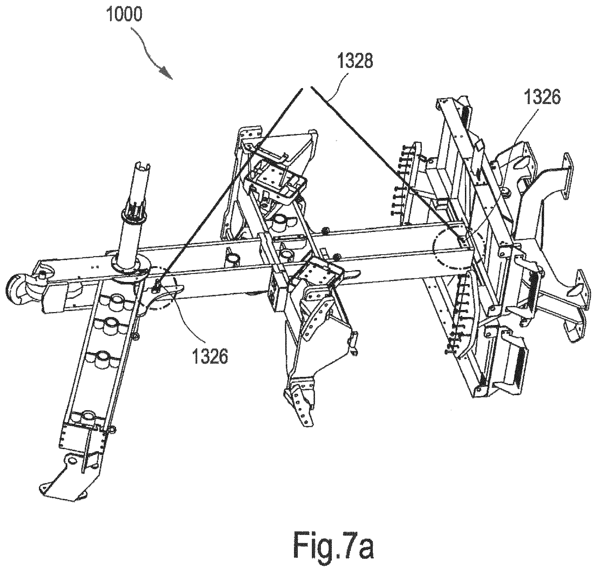

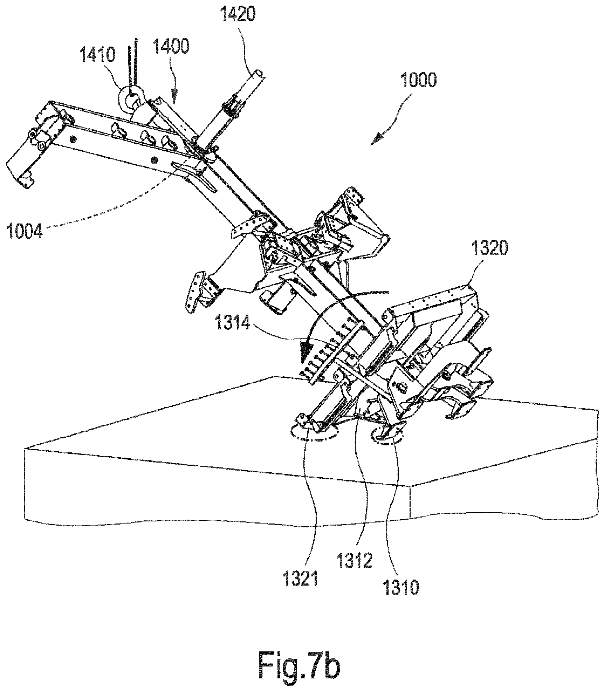

Unter Bezugnahme auf die Fig. 7a und 7b wird das Anheben der Vorrichtung 1000 aus der in Fig. 5 gezeigten Transportlage heraus beschrieben. Zum Anheben der Vorrichtung 1000 aus der seitlichen Transportlage weist die Vorrichtung 1000 wenigstens zwei Hebepunkte 1326 auf. An den Hebepunkten 1326 können bspw. Rundschlingen 1328 oder Seile, Gurte o.dgl. befestigt werden, die bspw. zu einem Kranhaken geführt werden, mit dem dann die Vorrichtung 1000 angehoben wird.

Fig. 7b zeigt die Anordnung der Vorrichtung 1000 und der Befestigungsmittel zum Kippen der Vorrichtung. Dazu wird der Schlitten 1400 in der Feststellbohrung 10004 verbolzt und gesichert. Zusätzlich sind wenigstens ein Fußarm 1312, nämlich derjenige, auf dessen Seite die Vorrichtung 1000 gekippt werden soll, und die unteren Befestigungsplatten 1314 nach oben geklappt und in der jeweiligen Stellung gesichert. An der Lasche 1410 ist die Vorrichtung 1000 über geeignete Mittel mit einem Kran verbunden, der die Vorrichtung 1000 dann aus der seitlichen Lage hebt oder in die seitliche Lage führt (siehe Pfeilrichtung). Die Vorrichtung 1000 kippt dabei über eine Kante 1321 des Arbeitspodestes 1320 und einen Fuß 1310. Die Vorrichtung 1000 wird derart gekippt, so dass in der seitlichen Liegeposition bzw. Transportlage der Hydraulikzylinder 1420 nach oben ragt.

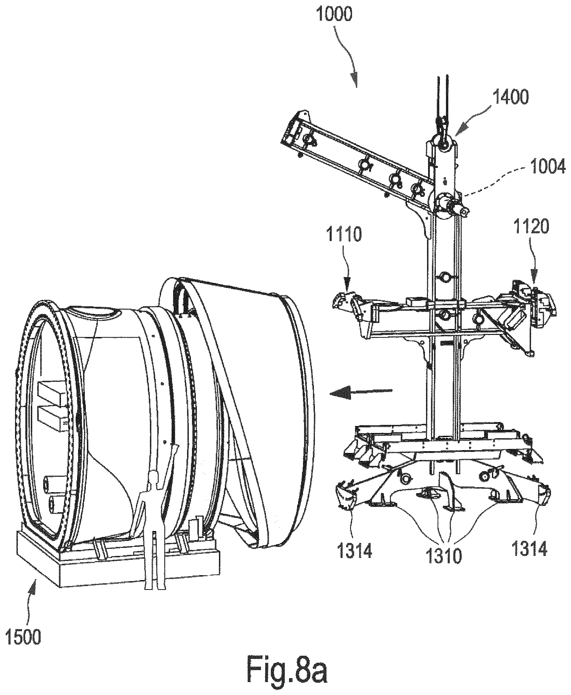

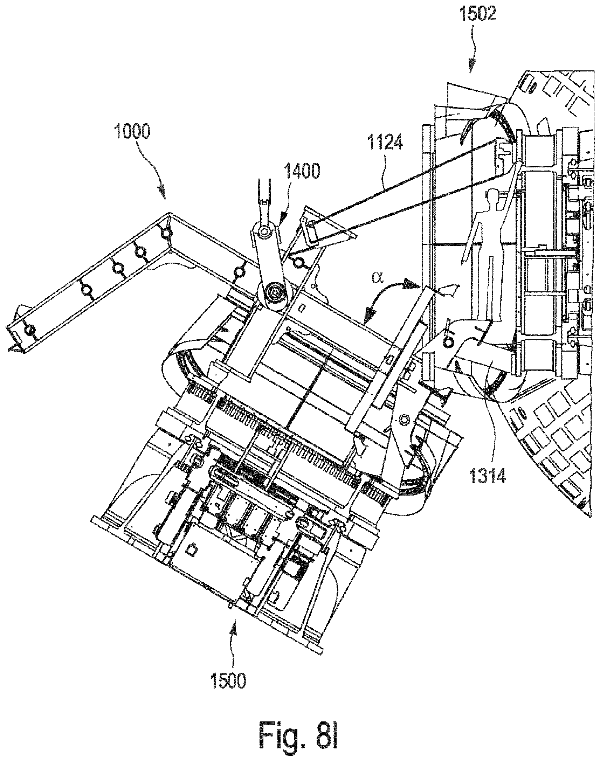

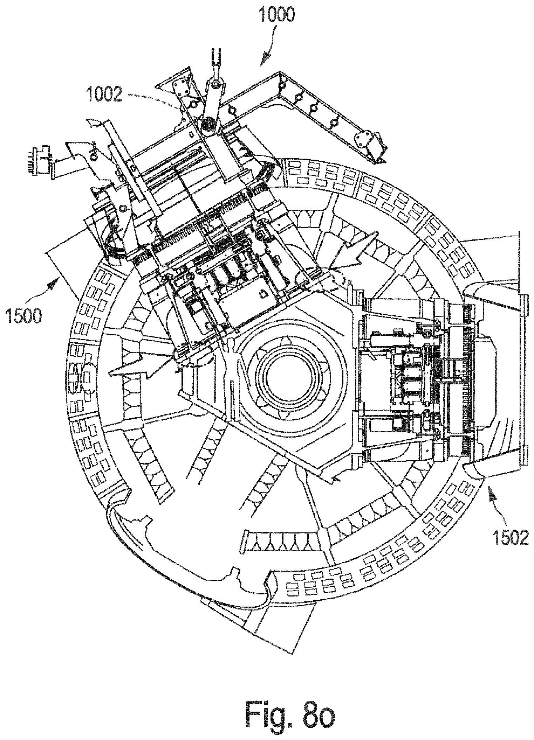

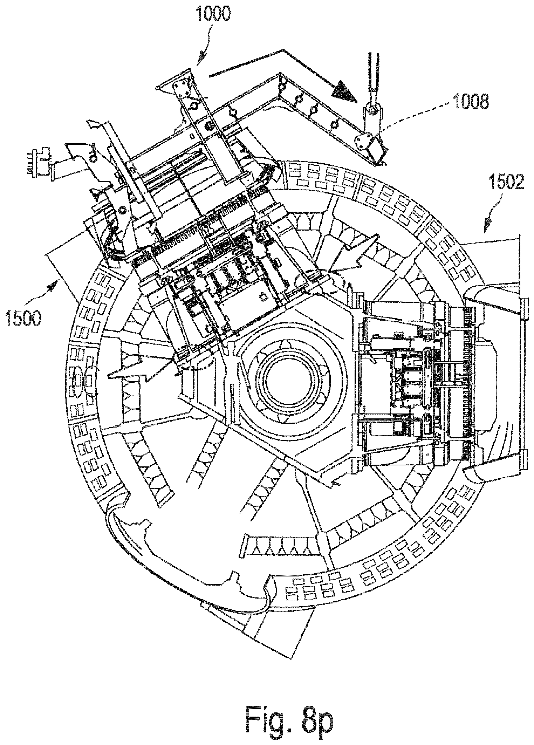

Fig. 8a bis 8u zeigen schematische Ansichten während des erfindungsgemäßen Montageverfahrens gemäß einem ersten Ausführungsbeispiel.. Das Verfahren wird beispielhaft an der Montage von zwei Blattanschlusseinheiten, an denen bereits die Blattdommanschetten befestigt sind, beschrieben. Fig. 8a zeigt einen ersten Schritt S1. Zunächst wird also, wie voranstehend beschrieben, die Vorrichtung 1000 aufgerichtet, so dass die Vorrichtung 1000 sicher auf den Füßen 1310 steht. Die unteren Befestigungsplatten 1314 der Befestigungseinheiten 1110 und 1120 sind herunter geklappt und verbolzt. Aufgrund des Aufrichtens der Vorrichtung 1000 ist der Schlitten noch in Position 4, also in der Feststellbohrung 1004 verbolzt und gesichert. Die erste Blattanschlusseinheit mit Blattdommanschette 1500 (im Folgenden erste Komponente 1500) befindet sich in einem Transportgestellt, das mit Baggermatten unterlegt sein kann. An bspw, einem Kran hängend, wird die Vorrichtung 1000 entsprechend des Pfeils an die erste Komponente 1500 herangefahren.

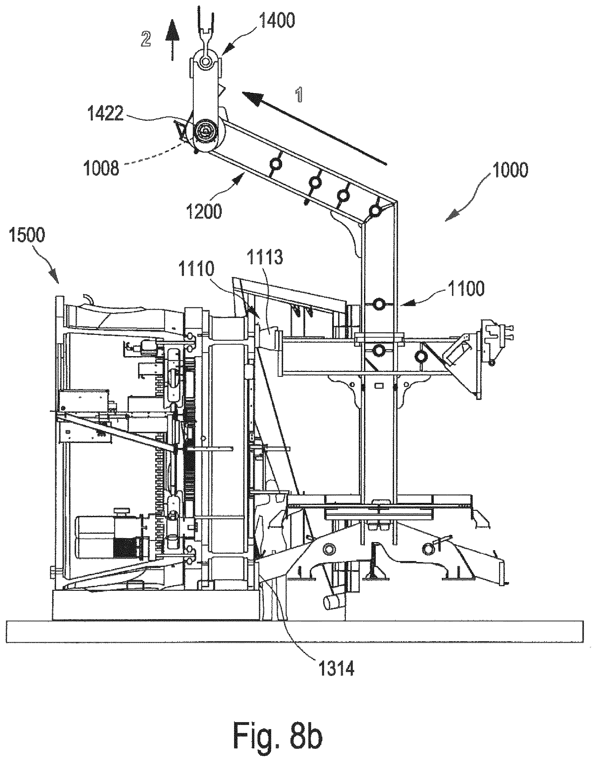

Wie in Fig. 8b gezeigt, wird die erste Komponente 1500 an der Vorrichtung 1000 befestigt. Dazu werden eine Mehrzahl von Schrauben an der oberen Befestigungsplatte 1113 und der unteren Befestigungsplatte 1314 der Befestigungseinheit 1110 befestigt. Die erste Komponente 1500 kann dabei im Wesentlichen bis an den ersten Abschnitt 1100 heran ragen. Mit anderen Worten ist die Vorrichtung dazu vorbereitet und ausgelegt, Komponenten einer Windenergieanlage unterschiedlicher Größe und Form aufzunehmen. Der Schlitten 1400 wird von der vorhergehenden Stellung (Position 4) auf die Position 8 verfahren (entsprechend Pfeil 1) und dementsprechend in der Feststellbohrung 1008 mit dem Lastbolzen 1422 verbolzt und gesichert. Zum Sichern dient der angesprochene Hydraulikzylinder oder die Bolzensicherung. Nachfolgend soll die Vorrichtung 1000 mit der ersten Komponente 1500 angehoben werden, so dass vorrausschauend ggf. Führungsseile an der Komponente 1500 und/oder der Vorrichtung 1000 angebracht werden können. Vor dem Anheben müssen ggf. noch Schrauben, die die Komponente 1500 in dem Transportgestell sichern, gelöst werden. Sind diese vorbereitenden Schritte erfolgt, kann entsprechend Pfeil 2 die Vorrichtung 1000 mit der ersten Komponente 1500 angehoben werden.

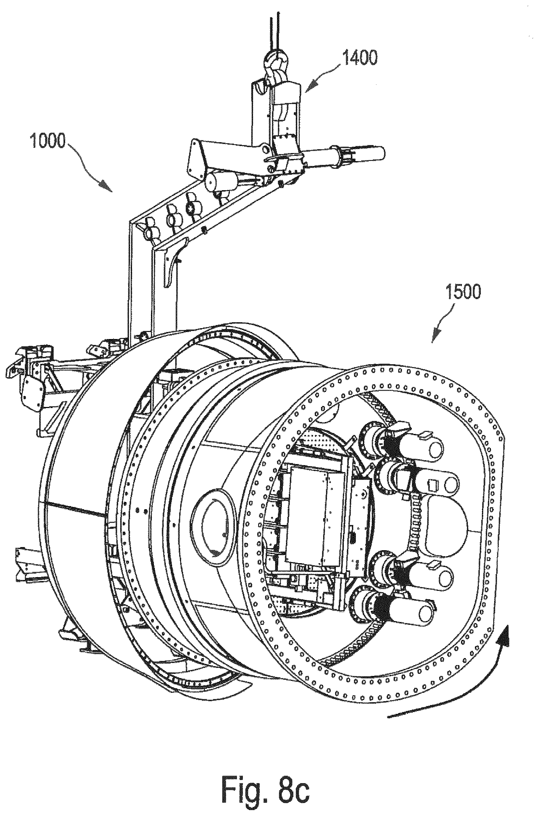

Während die Vorrichtung 1000 mit der Komponente 1500 in der Luft hängen, kann die Nabenadaptereinheit der Blattanschlusseinheit um 90° entsprechend des Pfeils in Fig. 8c gedreht werden.

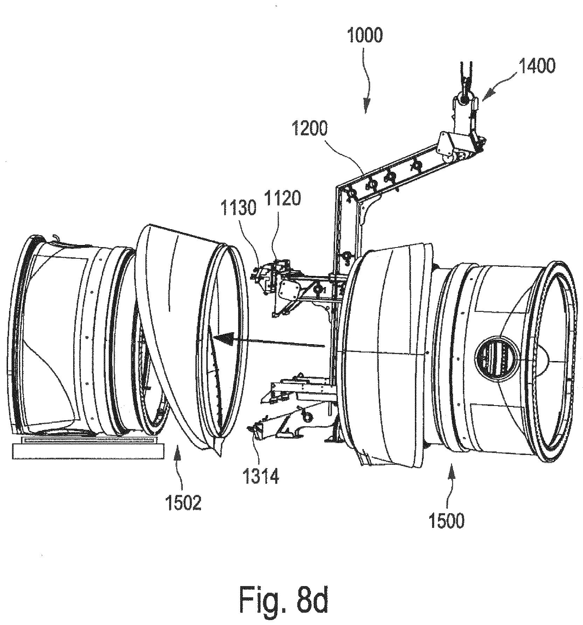

Wie in Fig. 8d gezeigt (Pfeil), wird die Vorrichtung 1000 mit der ersten Komponente 1500 in Richtung einer zweiten Komponente 1502 geschwenkt. Auch die zweite Komponente 1502 ist in dem gezeigten Beispiel eine Blattanschlusseinheit mit daran angebrachter Blattdommanschette. Wie die erste Komponente 1500 wird die zweite Komponente 1502 an der oberen Befestigungsplatte 1113 und der unteren Befestigungsplatte 1314 der zweiten Befestigungseinheit 1120 mit der Vorrichtung 1000 befestigt.

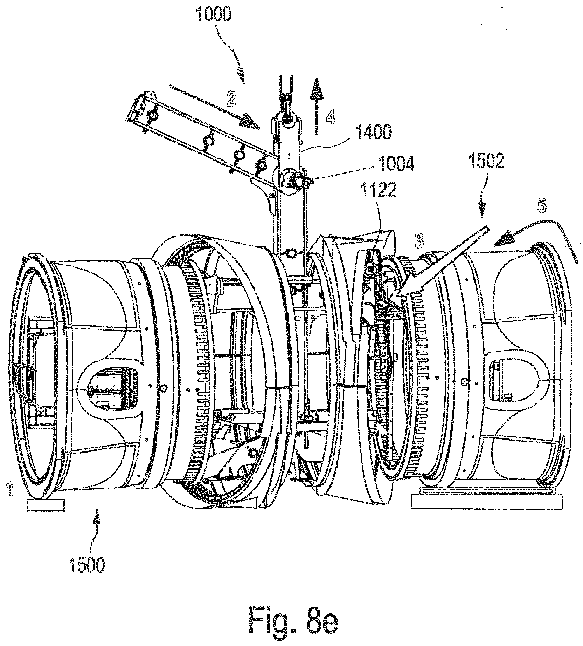

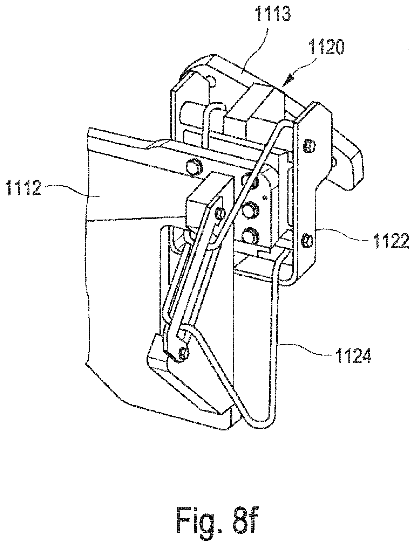

Fig. 8e zeigt die Vorrichtung 1000 mit den daran befestigten Komponenten 1500, 1502 von der anderen Seite, als in den Fig. 8a bis 8d zu sehen war. Zum Ablassen des der Vorrichtung 1000 wird gemäß 1 in Fig. 8e eine Unterlage für die Komponente 1500 bereitgestellt und untergelegt. Für das weitere Verfahren ist es notwendig gemäß Pfeil 2 den Schlitten 1400 in Position 4 zu verfahren und in der Feststellbohrung 1004 zu verbolzen und zu sichern. An der Aufnahme 1122 für eine Rundschlinge wird gemäß 3 eine Rundschlinge 1124 befestigt, wie es in Fig. 8f gezeigt ist. Demnach wird die Rundschlinge 1124 hinter der oberen Befestigungsplatte 1113 der Befestigungseinheit 1120 durch die Aufnahme 1122 geführt und daran befestigt. Die obere Befestigungsplatte 1113 der Befestigungseinheit 1120 wird in gewisser Weise an der Aufnahme 1122 für die Rundschlinge 1124 angebracht. Mit anderen Worten, die Aufnahme 1122 ist wahlweise einsetzbar. Wird die Aufnahme 1122 nicht für das Verfahren benötigt, kann die obere Befestigungsplatte 1113 auch direkt an dem Arm 1112 befestigt werden. Für das beispielhaft beschriebene Verfahren wird in diesem Fall die Aufnahme 1122 jedoch benötigt, wie nachfolgend noch beschrieben wird. Nachdem die Rundschlinge 1124 angebracht ist, kann die Vorrichtung 1000 mit den Komponenten 1500, 1502 angehoben werden (Pfeil 4). Nun lässt sich auch die Nabenadaptereinheit der Blattanschlusseinheit 1502 um bspw. 90° drehen (Pfeil 5).

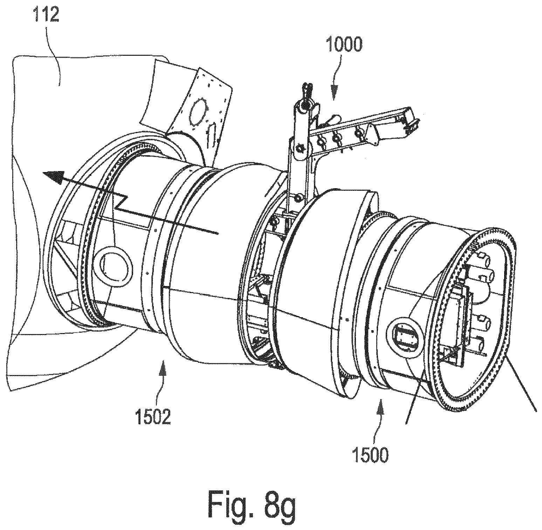

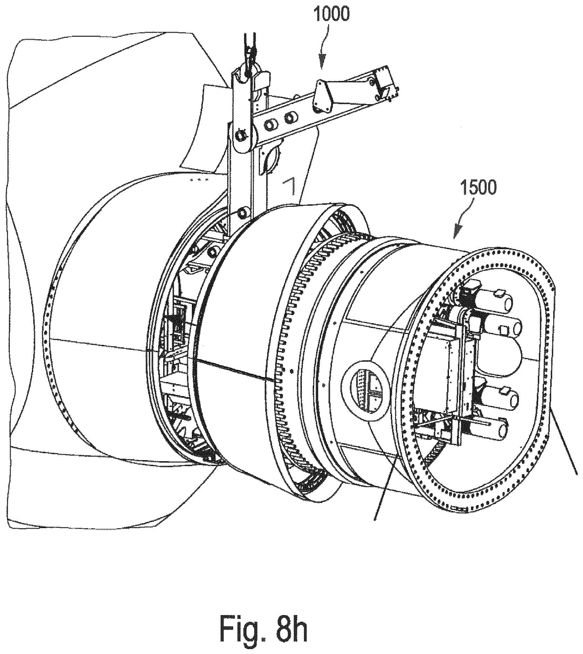

So vorbereitet kann die Vorrichtung 1000 mit den beiden Komponenten 1500, 1502 auf die vorgesehene Höhe gehoben werden. Wie in Fig. 8g gezeigt, wird die Blattanschlusseinheit der Komponente 1502 zuerst an eine Nabe 112 der Windenergieanlage 100 herangeführt. Der Rotor 106 ist dabei so ausgerichtet, dass die Komponente 1502 auf der 3 Uhr Position des Rotors 106 montiert wird. Es ist vorgesehen, dass die Vorrichtung 1000 bzw. die Komponente 1502 etwas unterhalb einer gedachten Blattlängsachse parallel in Richtung der Öffnung der Nabe 112 bis kurz vor den Nabenflansch geführt wird, damit ein Kontakt mit einer eventuellen Blatterweiterung vermieden wird, wie in Fig. 8h mit der Umrandung angedeutet.

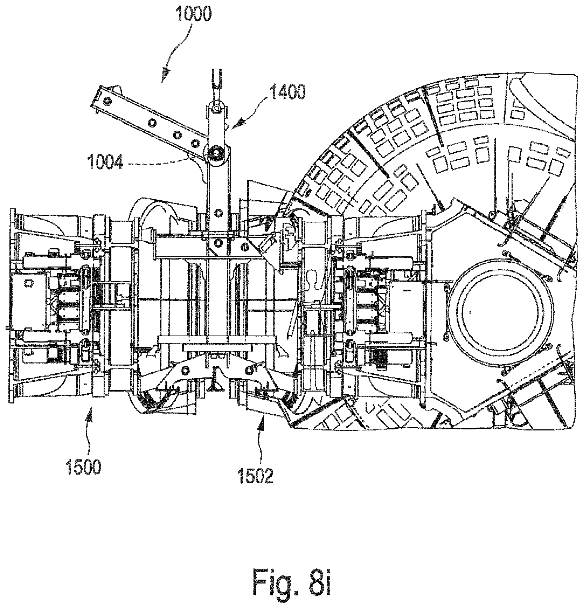

In Fig. 8i ist gezeigt, wie ein Monteur die Blattanschlusseinheit, welche noch von der Hebevorrichtung gehalten wird, an einer Nabe 112 der Windenergieanlage befestigt. Der Schlitten 1400 ist dabei in das Loch 1004 eingebolzt.

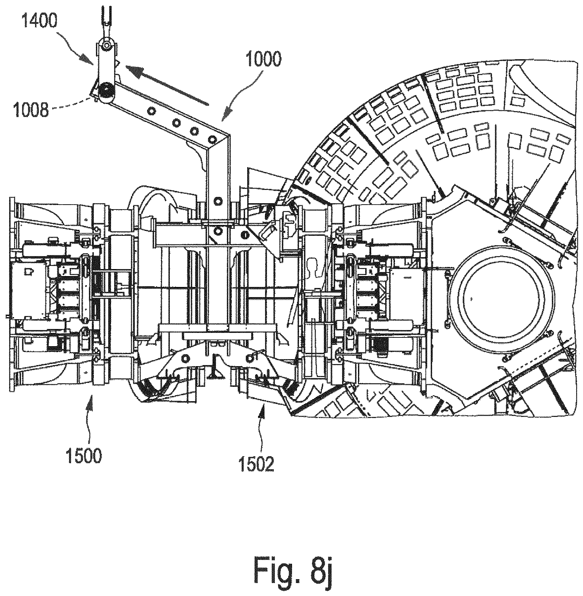

In Fig. 8j wird der Schlitten entlang des zweiten Abschnittes 1200 verfahren, sodass der Schlitten in dem Loch 1008 eingebolzt werden kann.

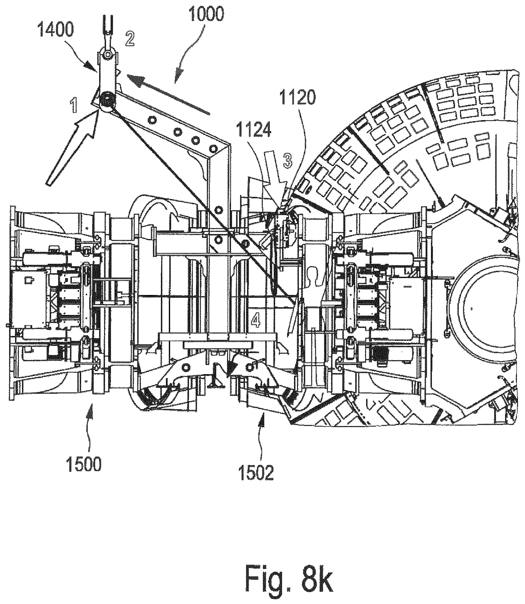

In Fig. 8k ist der Schlitten 1400 in dem Loch 1008 befestigt und die Hebevorrichtung kann um 60° abgelassen werden. Insbesondere kann die Hebevorrichtung mit einem Adapter außen um 61° nach unten verschwenkt werden. Dies kann insbesondere erfolgen bis die Rundschlingen 1124 auf Zug sind.

In Fig. 8I ist die Hebevorrichtung in einer verschwenkten Position bspw. mit α = 61° verschwenkt gezeigt. Die Rundschlingen 1124 sind auf Zug, sodass keine Last mehr an dem Kranhaken anliegt. Der Schlitten 1400 kann verfahren werden, sodass er in dem Loch 1002 verbolzt bzw. befestigt werden kann. Anschließend kann der Kranhaken wieder leicht angehoben werden, damit die Rundschlingen 1124 nicht mehr unter Spannung stehen.

In Fig. 8I ist eine optimale Schwerpunktlage der Hebevorrichtung mit einer ersten montierten Komponente gezeigt.

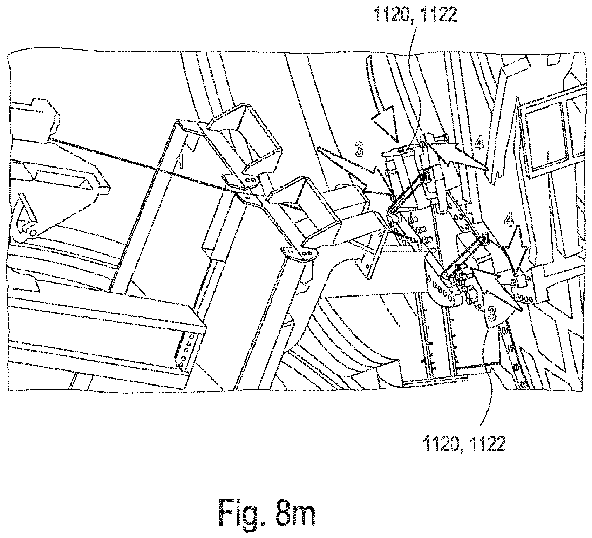

Fig. 8m zeigt wie die Vorrichtung mit der Blattanschlusseinheit in der 9 Uhr Position unter einem Winkel von 90° demontiert werden kann. Der zwischen der Flanschplatte unten und dem Grundrahmen befestigte Spanngurt hebt die Flanschplatte unten etwas an. Die beiden Flanschplatten werden um ca. 180° nach unten gedreht. Die beiden Flanschplatten liegen oben und werden mittels geeigneter Anschlagmittel an den Lastböcken an der Flanschplatte unten befestigt.

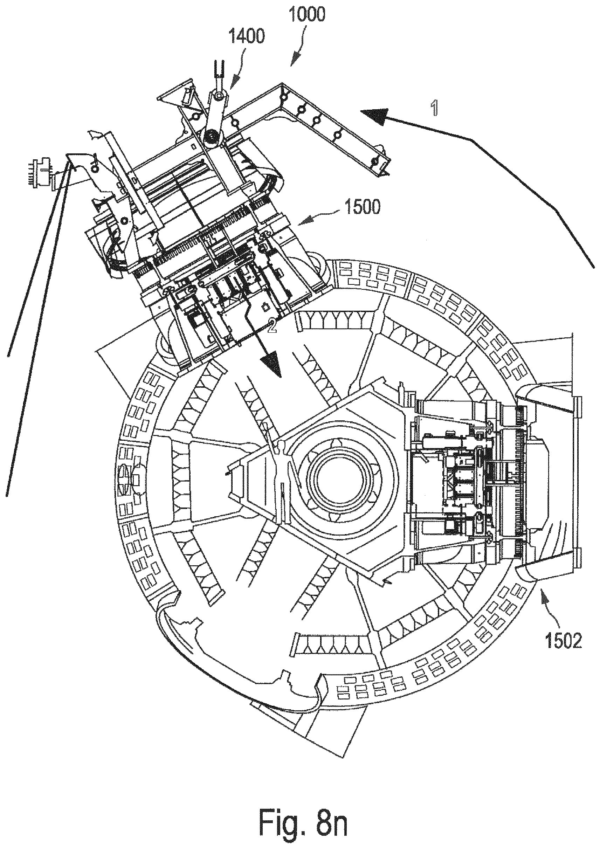

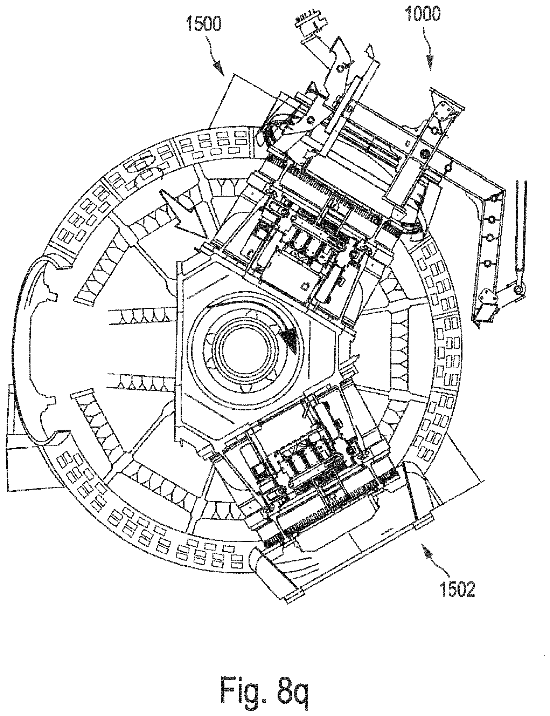

Fig. 8n zeigt eine Montage der zweiten Blattanschlusseinheit in einer 11 Uhr Position. Hierbei wird die Hebevorrichtung 1000 mit der Blattanschlusseinheit 1500 durch einen Kran gehalten. Hierzu wird insbesondere die Hebevorrichtung von der 3 Uhr Position in eine 11 Uhr Position geschwenkt. Die Hebevorrichtung mit der Blattanschlusseinheit wird ähnlich wie bei der 3 Uhr Position eingefädelt und die Blattanschlusseinheit wird an der Nabe der Windenergieanlage befestigt. Anschließend wird der Schlitten 1400 wieder entlang des zweiten Abschnittes verfahren und in dem Loch 1008 verbolzt. Die Rotornabe wird dann im Uhrzeigersinn gedreht (Fig. 8q).

Der Schlitten 1400 kann über den 12 Uhr Totpunkt bewegt werden und in dem Loch 1008 verbolzt werden.

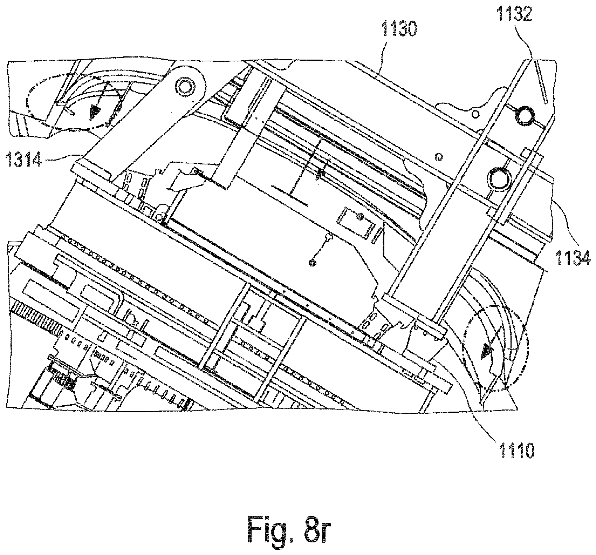

Die Rotornabe wird im Uhrzeigersinn verdreht, sodass die zweite Blattanschlusseinheit über den 12 Uhr Totpunkt auf eine 9 Uhr Montageposition gedreht wird. In Fig. 8r kann eine Rotorblattdommanschette auf 1 Uhr montiert werden, um die Vorrichtung über das Blattflanschlager drehen zu können.

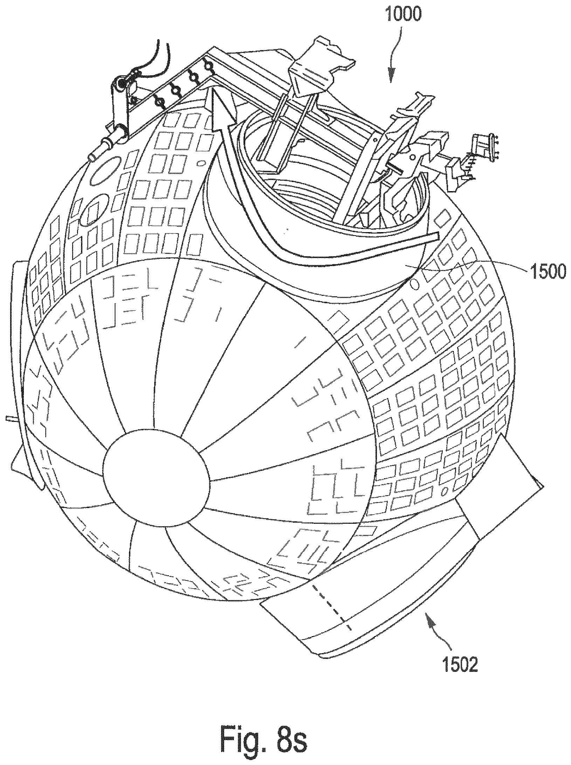

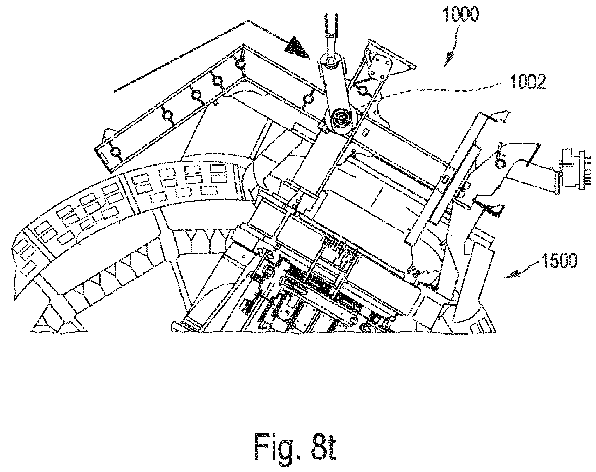

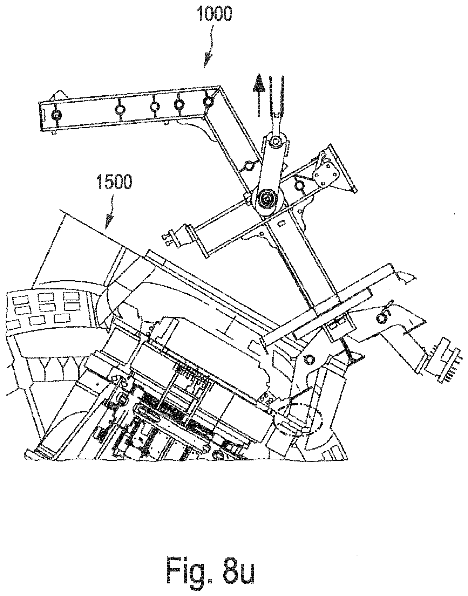

In Fig. 8s wird die Vorrichtung auf 1 Uhr über die Spinnerseite um ca. 175° gedreht, damit der zweite Abschnitt 1200 der Hebevorrichtung 1000 nach oben gedreht werden kann. Anschließend kann (Fig. 8t) der Schlitten 1400 wieder verfahren werden und in dem Loch 1002 verbolzt werden. Anschließend kann (Fig. 8u) die Hebevorrichtung 1000 durch einen Kran angehoben und entfernt werden.

Bei dem Verfahren zur Montage von Komponenten einer Windenergieanlage gemäß dem zweiten Ausführungsbeispiel wird die Hebevorrichtung 1000 auf einem ebenen Boden aufgestellt und eine erste und zweite Komponente einer Windenergieanlage 1500, 1502 werden an der ersten und zweiten Befestigungseinheit 1110, 1120 befestigt. Der Schlitten 1400 wird in dem Durchgangsloch 1004 verbolzt, sodass sich die Öse des Schlittens im Wesentlichen senkrecht zu ersten und zweiten Befestigungseinheit befindet. Eine erste Komponente 1500 der Windenergieanlage wird in oder an einem ersten Rotornabenanschluss befestigt. Die Hebevorrichtung 1000 wird mittels eines Kranhakens angehoben, sodass eine der Komponenten 1500, 1502 an einem ersten Rotorblattnabenanschluss befestigt werden kann, welcher sich in der 3 Uhr Position befindet (Fig. 8g). Die Hebevorrichtung 1000 kann etwas tiefer als die Blattlängsachse geführt werden, damit optional eine Blattdommanschette nicht mit einer Blatterweiterung kollidiert (Fig. 8h). Die Komponente der Windenergieanlage wird mit dem ersten Nabenanschluss verschraubt (Fig. 8i). Der Schlitten 1400 wird verfahren und in der Bohrung 1008 befestigt (Fig. 8j). Anschließend übernimmt der Kranhaken, welcher an einer Öse des Schlittens 1400 befestigt ist, die Last der Hebevorrichtung 1000. Anschließend können die Schrauben zwischen der Befestigungseinheit und der Komponente gelöst werden (Fig. 8k). Anschließend wird der Schlitten 1400 verfahren und in der Bohrung 1004 befestigt. Dann kann die Hebevorrichtung 1000 um ungefähr 60° oder 61° nach unten verschwenkt werden, bis die Rundschlingen 1124 auf Zug sind und der Kranhaken keine Last mehr hat (Fig. 8k, Fig. 8I). Anschließend kann die Hebevorrichtung 1000 angehoben werden bis die Rundschlingen 1124 nicht mehr unter Spannung sind. Die Hebevorrichtung kann mit der Rotornabe von einer 3 Uhr Position in eine 11 Uhr Position gedreht werden. Eine zweite Komponente kann in die Öffnung eingeführt werden, sodass die Komponente dann an dem zweiten Rotornabenanschluss befestigt werden kann. Anschließend kann der Schlitten 1400 verfahren werden und in der Bohrung 1008 befestigt werden. Die Rotorarretierung kann entriegelt werden und der Rotor kann gedreht werden, ein Kranhaken kann abgelassen werden bis in der 9 Uhr Position ein freier Blattanschluss erreicht ist (Fig. 8q).

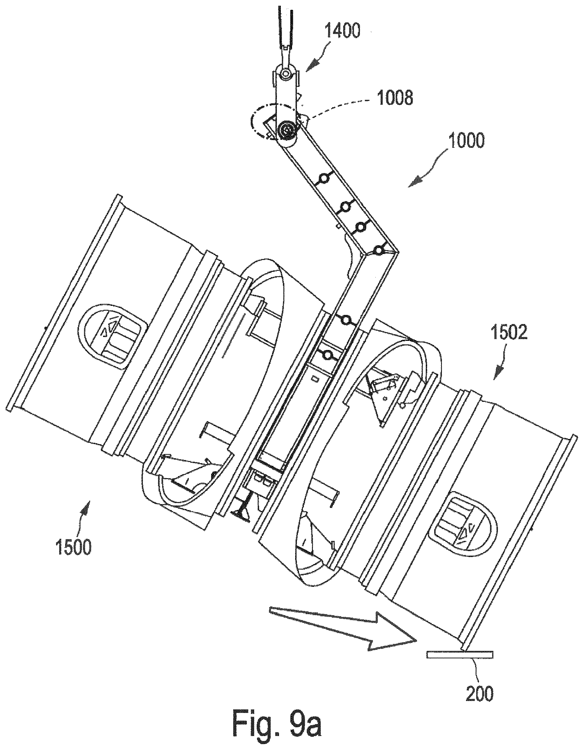

Fig. 9a bis 9c zeigen verschiedene Ansichten bei der Montage von Komponenten einer Windenergieanlage gemäß einem zweiten Ausführungsbeispiel. Die Hebevorrichtung 1000 gemäß dem zweiten Ausführungsbeispiel kann der Hebevorrichtung gemäß dem ersten Ausführungsbeispiel (Fig. 2) entsprechen.

In Fig. 9a ist die Hebevorrichtung 1000 mit zwei Blattanschlusseinheiten 1500, 1502 gezeigt. Der Schlitten 1400 ist in dem Loch 1008 verbolzt und die beiden Blattanschlusseinheiten 1500, 1502 sind um bspw. 30° angewinkelt vorgesehen. Eine der Blattanschlusseinheiten 1502 kann dabei auf einem Holzstück 200 platziert sein. Anschließend kann die Hebevorrichtung 1000 mit den beiden Blattanschlusseinheiten durch einen Kran angehoben werden. Gemäß dem zweiten Ausführungsbeispiel erfolgt eine Montage der Blattanschlusseinheiten in einer 2 Uhr Position, einer 11 Uhr Position und einer 9 Uhr Position.

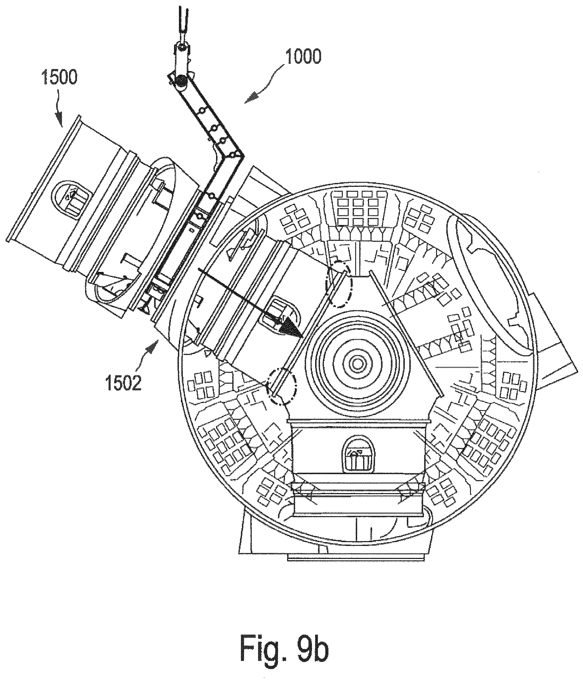

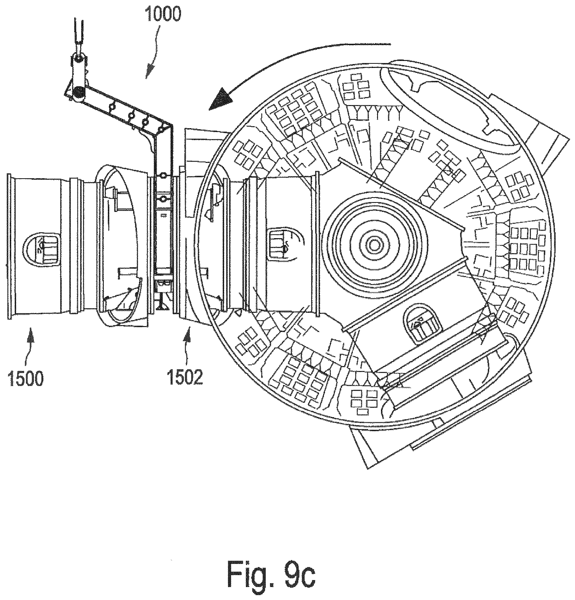

Wie in Fig. 9b zu sehen, wird eine der Blattanschlusseinheiten 1502 unter 30° in eine Rotornabe in der 11 Uhr Position eingefädelt. Dies kann, wie in dem ersten Ausführungsbeispiel in der 3 Uhr Position beschrieben erfolgen. Anschließend kann, wie in Fig. 9c zu sehen, die Rotornabe um 30° gegen den Uhrzeigersinn gedreht werden. Dann kann die Blattanschlusseinheit wie gemäß dem ersten Ausführungsbeispiel beschrieben montiert werden.

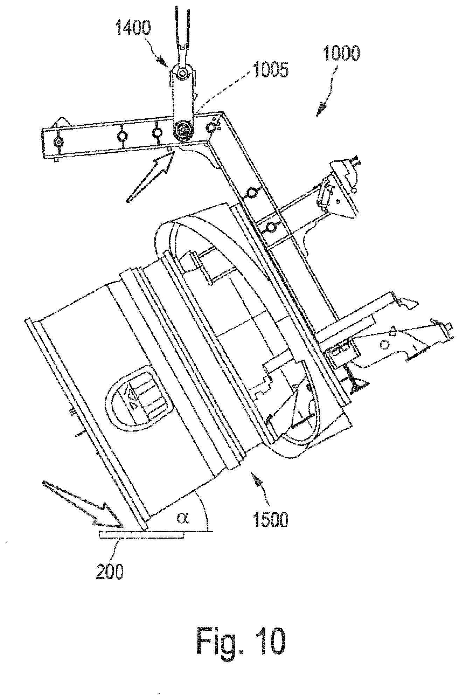

Fig. 10 zeigt eine schematische Darstellung einer Hebevorrichtung mit einer einzelnen Rotorblattanschlusseinheit gemäß einem dritten Ausführungsbeispiel.

Die Rotorblattanschlusseinheit 1500 kann auf einem Holzstück 200 platziert werden und in einem Winkel α von bspw. 30° mittels der Hebevorrichtung 1000 angehoben werden. Dazu kann der Schlitten 1400 bspw. in dem Loch 1005 eingebolzt werden. Gemäß dem dritten Ausführungsbeispiel wird lediglich eine einzelne Rotorblattanschlusseinheit montiert. Anschließend kann die Hebevorrichtung 1000 mit der einzelnen Blattanschlusseinheit 1500 angehoben und, wie bereits oben beschrieben, an einer Rotornabe montiert werden.

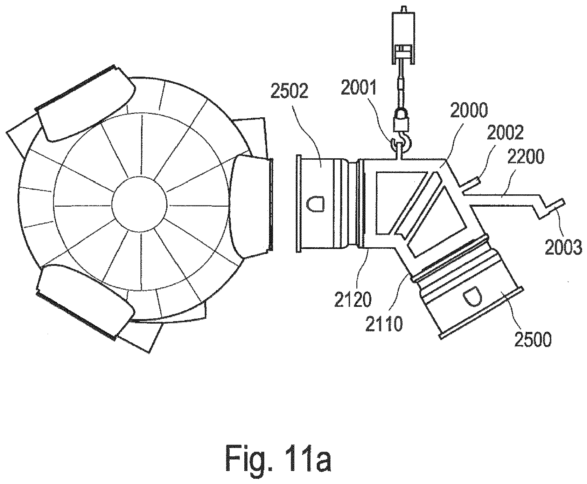

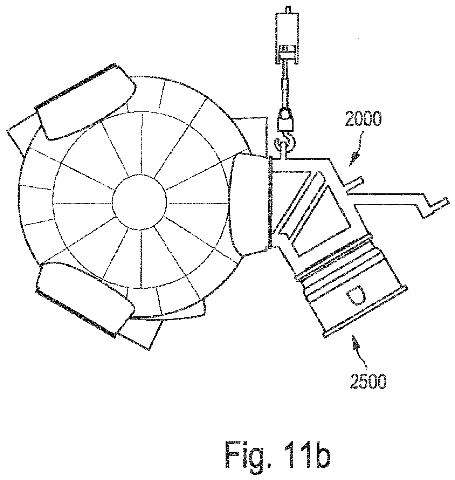

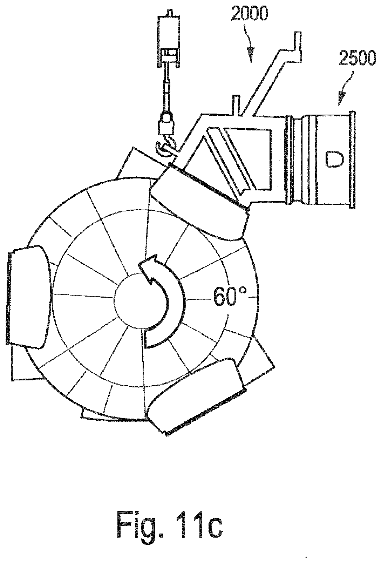

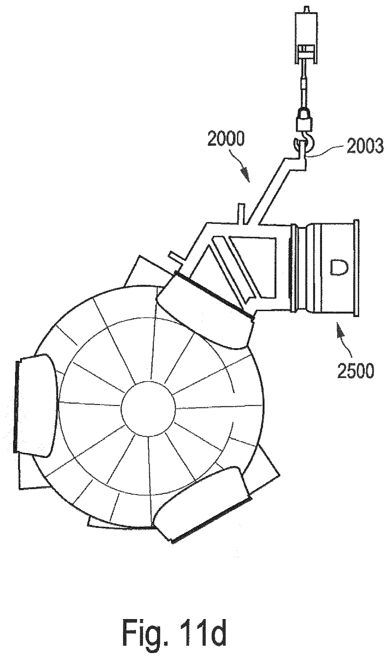

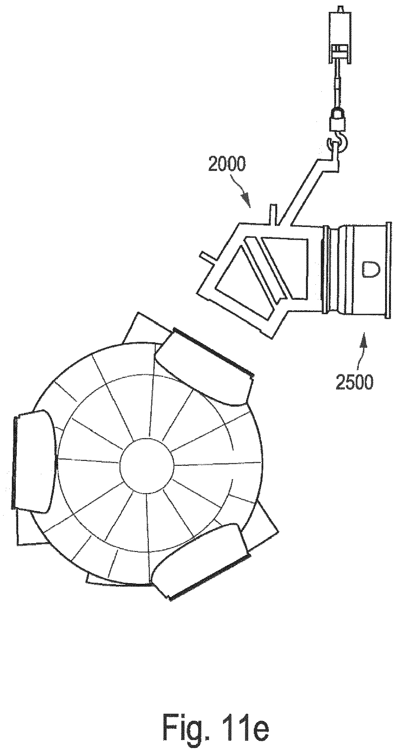

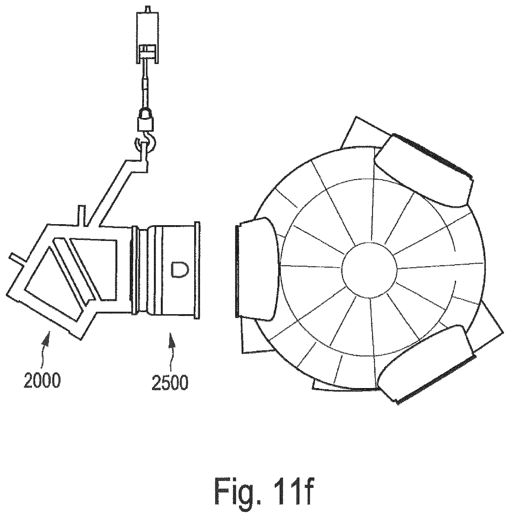

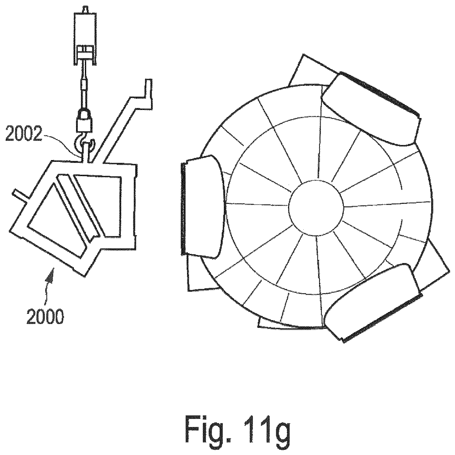

In den Fig. 11a bis 11g werden jeweils verschiedene Ansichten der Hebevorrichtung bei einer Montage von Komponenten einer Windenergieanlage gemäß einem dritten Ausführungsbeispiel gezeigt. Die Hebevorrichtung 2000 gemäß dem dritten Ausführungsbeispiel weist eine erste Befestigungseinheit 2110 und eine zweite Befestigungseinheit 2120 auf. Ferner weist die Hebevorrichtung einen Arm 2200 auf. Die Hebevorrichtung weist drei verschiedene Haken oder Ösen 2001-2003 auf, welche zur Aufnahme eines Kranhakens dienen. Die erste und zweite Befestigungseinheit 2110, 2120 sind in einem Winkel α zueinander angeordnet. Dieser Winkel α kann bspw. 30° betragen. An der ersten Befestigungseinheit 2110 kann bspw. eine erste Komponente 2500 einer Windenergieanlage und an der zweiten Befestigungseinheit 2120 kann eine zweite Komponente 2502 einer Windenergieanlage befestigt werden. Wie in Fig. 11a gezeigt, wird ein Kranhaken in einem ersten Haken 2100 in der Nähe der zweiten Befestigungseinheit 2120 eingehakt und die Hebevorrichtung 2000 mit den beiden Komponenten der Windenergieanlage 2500, 2502 werden angehoben, während der Rotor der Windenergieanlage in eine 3 Uhr Position gedreht wird, sodass eine Komponente 2500 eingeführt werden kann. Dies ist bspw. in Fig. 11b gezeigt. Anschließend kann wie in Fig. 11c gezeigt der Rotor um 60° gegen den Uhrzeigersinn gedreht werden und der Kranhaken versetzt werden und an dem dritten Haken 2300 befestigt werden (s. Fig. 11d). Anschließend kann die Hebevorrichtung 2000 zusammen mit der Komponente 2500, welche bspw. eine Blattanschlusseinheit darstellen kann, angehoben werden. Anschließend kann wie in Fig. 11f gezeigt die Hebevorrichtung 2000 auf die andere Seite des Rotors verfahren werden, wobei die Blattanschlusseinheit 2500 in einer 3 Uhr Position angeordnet ist, sodass sie an einer Rotornabe, welche sich in der 9 Uhr Position befindet, eingeführt und befestigt werden kann. Anschließend kann die Hebeeinheit dann, wie in Fig. 11g gezeigt, entfernt werden, wobei der Kranhaken dann in den zweiten Haken 2200 eingehakt werden kann.

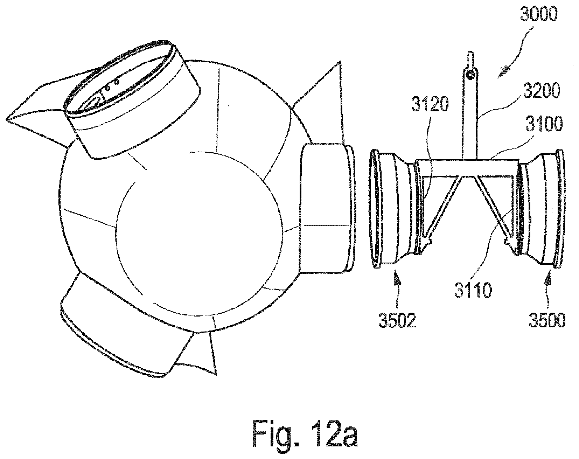

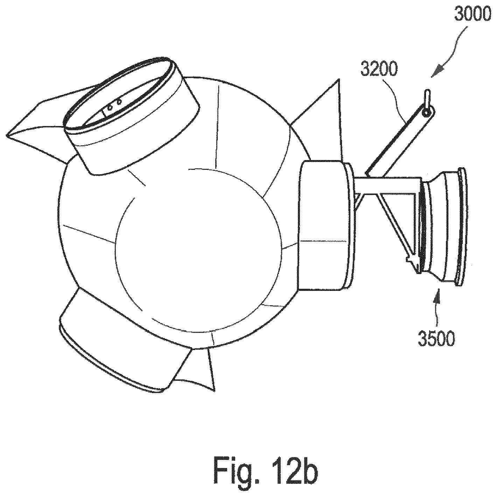

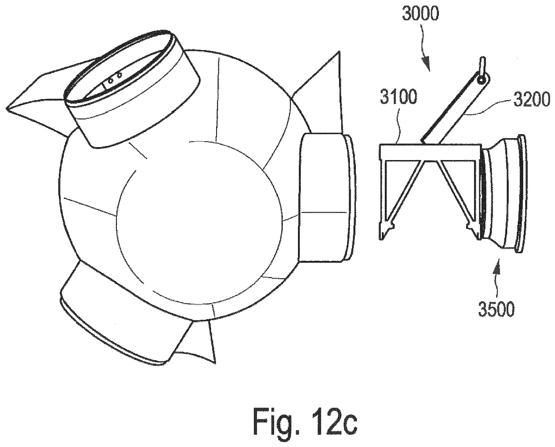

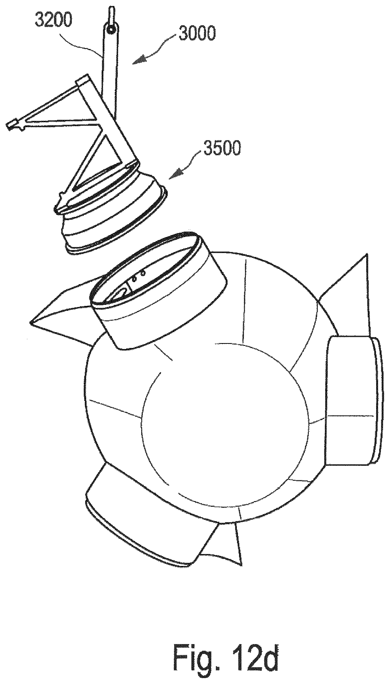

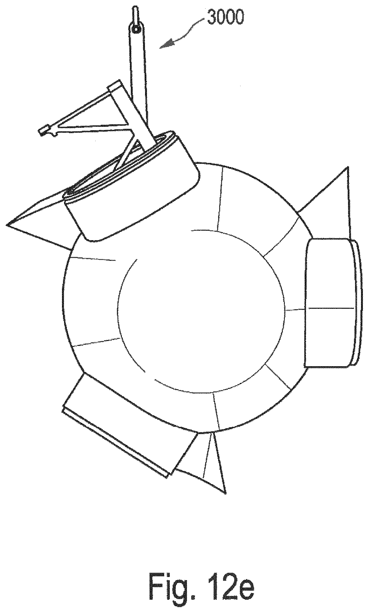

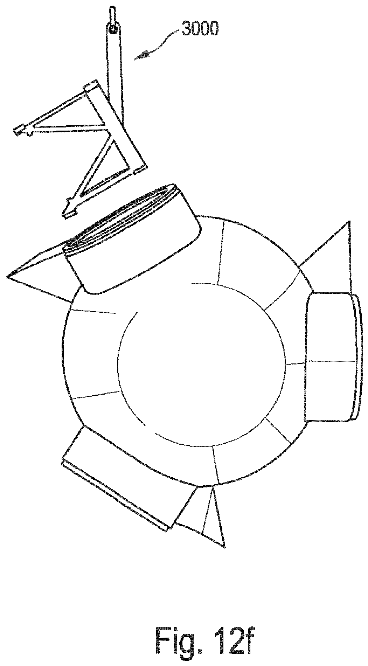

Fig. 12a bis 12f zeigen verschiedene Ansichten einer Hebevorrichtung zur Montage von Komponenten einer Windenergieanlage gemäß einem vierten Ausführungsbeispiel. Die Hebevorrichtung 3000 weist einen ersten Abschnitt 3100 mit einer ersten und zweiten Befestigungseinheit 3110, 3120 auf. Ferner weist die Hebevorrichtung 3000 einen zweiten Abschnitt 3200, welcher als ein Arm ausgestaltet sein und optional schwenkbar bezüglich des ersten Abschnitts ausgestaltet sein kann. Die erste und zweite Befestigungseinheit 3110, 3120 können bspw. im Wesentlichen parallel zueinander ausgestaltet sein. Eine Komponente einer Windenergieanlage wie bspw. eine Blattanschlusseinheit 3500, 3502 können an der ersten und zweiten Befestigungseinheit 3110, 3120 befestigt werden. Die Hebevorrichtung 3000 gemäß dem vierten Ausführungsbeispiel kann angehoben werden, während ein Rotorblattanschluss des Rotors sich in einer 3 Uhr Position befindet (Fig. 12a). Wie in Fig. 12b zu sehen, kann dann die zu montierende Komponente 3502 in den Rotorblattanschluss eingeführt werden und an der Rotorblattnabe befestigt werden. Anschließend kann der Arm 3200 wie in Fig. 12b verschwenkt werden, und die Hebevorrichtung 3000 kann von der Blattanschlusseinheit 3502 gelöst werden (Fig. 12c). Anschließend kann die Hebeeinheit 3000 über den Rotor angehoben werden, und die Blattanschlusseinheit 3500 kann in einen Blattanschluss in der 11 Uhr Position eingeführt werden. Dazu kann der Arm 3200 bezüglich des ersten Abschnittes 3100 verschwenkt werden, sodass Komponente 3500 befestigt werden kann (Fig. 12e). Anschließend kann die Komponente 3500 von der Hebevorrichtung entfernt werden, und die Hebevorrichtung kann mittels des Krans nach unten gelassen werden.

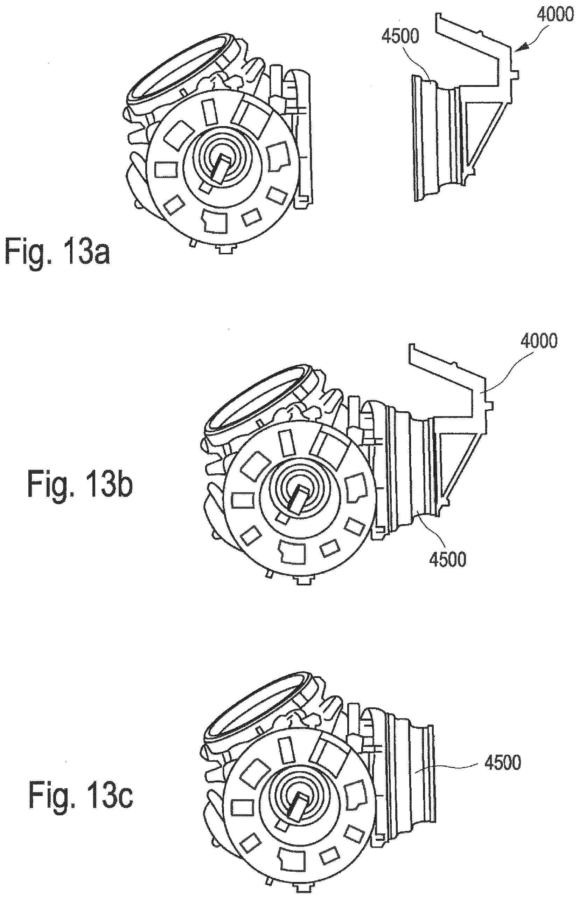

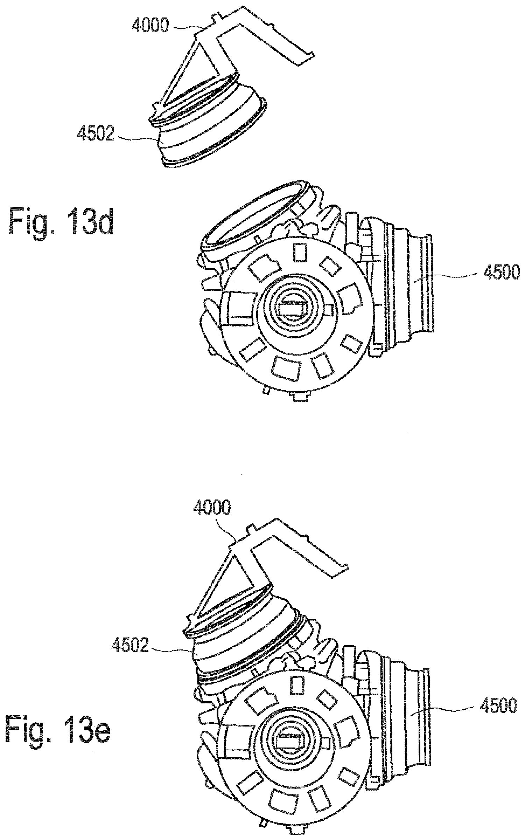

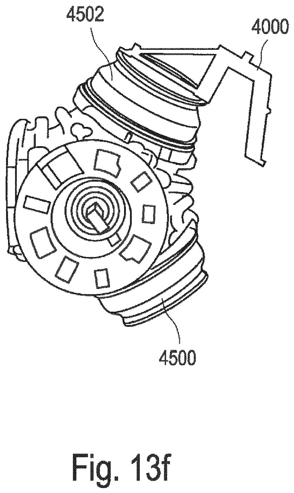

Fig. 13a bis 13f zeigen verschiedene Schritte bei der Montage einer Komponente einer Windenergieanlage gemäß einem fünften Ausführungsbeispiel. Gemäß dem fünften Ausführungsbeispiel ist eine Hebevorrichtung 4000 vorgesehen, welche lediglich eine erste Befestigungseinheit sowie einen Arm aufweist. An dem Arm können mehrere Anschlagpunkte für einen Kran vorgesehen sein. Wie in Fig. 13a gezeigt, wird die Rotornabe so verdreht, dass ein Nabenanschluss sich in der 3 Uhr Position befindet. Die Komponente 4500, welche an der Befestigungseinheit der Hebevorrichtung 4000 angeschlossen ist, wird an die Rotornabe herangeführt und befestigt. Anschließend wird die Hebevorrichtung 4000 entfernt (Fig. 13c), und eine zweite Komponente 4502 wird an der Hebevorrichtung befestigt. Die Hebevorrichtung 4000 wird dann angehoben, und die zweite Komponente 4502 wird an einem Rotorblattnabenanschluss in der 11 Uhr Position befestigt (s. Fig. 13d, 13e). Anschließend wird der Rotor im Uhrzeigersinn gedreht, bis ein Rotorblattnabenanschluss sich in der 9 Uhr Position befindet. Anschließend kann eine weitere Montage einer Komponente erfolgen.

Die Hebevorrichtung gemäß der Erfindung dient insbesondere dazu, ein bis zwei gleichartige Bauteile in verschiedene Winkelpositionen anzuheben. Derartige Bauteile können Blattanschlusseinheiten, Blattdommanschetten, Blattadapter, Blattadapter einschließlich Blattflanschlager oder dergleichen darstellen.

Die Hebevorrichtung gemäß einem Aspekt der vorliegenden Erfindung weist einen Grundrahmen, einen I-Träger, einen Schlitten, eine Flanschplatte oben an der I-Trägerseite, eine Flanschplatte oben, eine Flanschplatte unten, einen Podest, eine Rundschlingaufnahme und einen Fuß des I-Trägers auf.

Mit der erfindungsgemäßen Hebevorrichtung sowie dem erfindungsgemäßen Verfahren zur Montage von Komponenten einer Windenergieanlage können gleichzeitig mehrere Teile, vorzugsweise zwei Teile, mit einem einzigen Kranweg angehoben werden. Dies ist ein Vorteil hinsichtlich der Anzahl der Kranwege und der Kranzeit und führt zu einem effizienteren Aufbau der Windenergieanlage. Hierbei ist insbesondere zu beachten, dass ab einer Windgeschwindigkeit von 9 bis 10 m/s es nicht mehr möglich ist, Komponenten mittels eines Krans hochzuziehen. Eine Verkürzung der Kranzeiten bzw. eine Verringerung der Kranwege ist daher vorteilhaft.

## Patentansprüche

1. Hebevorrichtung (1000) zum Heben von Komponenten einer Windenergieanlage (100), mit
einem ersten Abschnitt (1100),
mindestens einer ersten und zweiten Befestigungseinheit (1110, 1120) jeweils zum Befestigen einer Komponente (1500, 1502) der Windenergieanlage (100), und
einem ersten Arm (1200) mit einer Mehrzahl von Bohrungen (1004 - 1008), wobei die Bohrungen (1004 - 1008) entlang des ersten Armes (1200) in unterschiedlichen Abständen zu der ersten und zweiten Befestigungseinheit (1110, 1120) vorgesehen sind;
einem zweiten und dritten Arm (1111, 1112), an welchen jeweils ein erster Teil (1113) der ersten und zweiten Befestigungseinheit (1110, 1120) vorgesehen ist, und
einer Bodeneinheit (1300), welche zwei zweite Teile (1314) der ersten und zweiten Befestigungseinheit (1110, 1120) aufweist,
wobei die zwei zweiten Teile (1314) verschwenkbar an der Bodeneinheit (1300) vorgesehen sind und eine Betriebsposition und eine Transportposition aufweisen,
wobei der erste, zweite und dritte Arm (1200, 1111, 1112) und die Bodeneinheit (1300) an dem ersten Abschnitt (1100) befestigt sind.

2. Hebevorrichtung nach Anspruch 1, wobei
der erste Arm (1200) zumindest teilweise oder abschnittsweise in einem Winkel zu der ersten und zweiten Befestigungseinheit (1110, 1120) angeordnet ist.

3. Hebevorrichtung nach einem der Ansprüche 1 oder 2, ferner mit
einem Schlitten (1400), der in einer der Mehrzahl der Bohrungen (1004 - 1008) feststellbar ist,
wobei der Schlitten (1400) eine Lasche oder Öse (1410) zur Aufnahme eines Kranhakens aufweist.

4. Hebevorrichtung nach einem der Ansprüche 1 bis 3, wobei der erste Arm (1200) einen ersten geraden und einen zweiten abgewinkelten Abschnitt (1134, 1200) aufweist.

5. Hebevorrichtung nach einem der Ansprüche 1 bis 4, wobei
die erste und zweite Befestigungseinheit (1110, 1120) im Wesentlichen parallel zueinander angeordnet sind.

6. Verfahren zur Montage von Komponenten einer Windenergieanlage an der Windenergieanlage mittels einer Hebevorrichtung nach einem der Ansprüche 1 bis 5 mit mindestens einer ersten und zweiten Befestigungseinheit (1110, 1120) jeweils zum Befestigen einer Komponente (1500, 1502) der Windenergieanlage (100), und einem ersten Arm (1200) mit einer Mehrzahl von Bohrungen (1004 - 1008), wobei die Bohrungen (1004 - 1008) entlang des ersten Armes (1200) in unterschiedlichen Abständen zu der ersten und zweiten Befestigungseinheit (1110, 1120) vorgesehen sind, und einem Schlitten (1400), der in einer der Mehrzahl der Bohrungen (1004 - 1008) feststellbar ist, wobei der erste, zweite und dritte Arm (1200, 1111, 1112) und die Bodeneinheit (1300) an dem ersten Abschnitt (1100) befestigt sind, mit den Schritten:
- Befestigen mindestens einer ersten und zweiten Komponente (1500, 1502) der Windenergieanlage (100) an der mindestens ersten und zweiten Befestigungseinheit (1110, 1120) der Hebevorrichtung (1000),
- Arretieren des Schlittens (1400) in einer der Mehrzahl der Bohrungen (1004), so dass ein an dem Schlitten (1400) befestigter Kranhaken im Wesentlichen senkrecht zur ersten und zweiten Befestigungseinheit (1110, 1120) ausgerichtet ist,
- Befestigen einer der Komponenten (1500, 1502) der Windenergieanlage (100), welche an der ersten oder zweiten Befestigungseinheit (1110, 112) befestigt ist, an einem ersten Rotornabenanschluss, der sich in der 3-Uhr Position befindet,
- Lösen der Komponenten (1500, 1502) der Windenergieanlage (100) von der ersten oder zweiten Befestigungseinheit (1110, 1120),
- Verfahren des Schlittens (1400) und Arretieren des Schlittens (1400) in einer weiteren Bohrung, welche sich zwischen der ersten und zweiten Befestigungseinheit (1110, 1120) befindet,
- Verschwenken der Hebevorrichtung (1000) um einen Winkel (α) nach außen,
- Anheben, Drehen und Verfahren der Hebevorrichtung (1000), so dass die zweite Komponente (1500) der Windenergieanlage (100), welche noch an der ersten oder zweiten Befestigungseinheit (1110, 1120) befestigt ist, an einem zweiten Rotornabenanschluss befestigt werden kann,
- Befestigen der noch an der Hebevorrichtung (1000) befestigten Komponente der Windenergieanlage (100) an dem zweiten Rotornabenanschluss, und
- Lösen der Komponenten (1500, 1502) der Windenergieanlage von der ersten oder zweiten Befestigungseinheit (1110, 1120).

7. Verfahren zur Montage von Komponenten einer Windenergieanlage an der Windenergieanlage mittels einer Hebevorrichtung nach einem der Ansprüche 1 bis 5 mit mindestens einer ersten und zweiten Befestigungseinheit (1110, 1120) jeweils zum Befestigen einer Komponente (1500, 1502) der Windenergieanlage (100), und einem ersten Arm (1200) mit einer Mehrzahl von Bohrungen (1004 - 1008), wobei die Bohrungen (1004 - 1008) entlang des ersten Armes (1200) in unterschiedlichen Abständen zu der ersten und zweiten Befestigungseinheit (1110, 1120) vorgesehen, und einem Schlitten (1400), der in einer der Mehrzahl der Bohrungen (1004 - 1008) feststellbar ist, wobei der erste, zweite und dritte Arm (1200, 1111, 1112) und die Bodeneinheit (1300) an dem ersten Abschnitt (1100) befestigt sind, mit den Schritten:
- Befestigen mindestens einer ersten und zweiten Komponente (1500, 1502) der Windenergieanlage (100) an der mindestens ersten und zweiten Befestigungseinheit (1110, 1120) der Hebevorrichtung (1000),
- Arretieren des Schlittens (1400) in einer der Mehrzahl der Bohrungen (1008), so dass ein an dem Schlitten (1400) befestigter Kranhaken im Wesentlichen in einem Winkel von 30° zur ersten und zweiten Befestigungseinheit (1110, 1120) ausgerichtet ist,
- Anheben der Hebevorrichtung (1000),
- Befestigen einer der Komponenten (1500, 1502) der Windenergieanlage, welche an der ersten oder zweiten Befestigungseinheit (1110, 112) befestigt ist, an einem ersten Rotornabenanschluss, der sich in der 11-Uhr befindet,
- Verfahren der Rotornabe, so dass sich die Hebevorrichtung (1000) in der 9-Uhr Position befindet
- Lösen der Komponenten (1500, 1502) der Windenergieanlage von der ersten oder zweiten Befestigungseinheit (1110, 1120),
- Verfahren des Schlittens (1400) und Arretieren des Schlittens (1400) in einer weiteren Bohrung, welche sich zwischen der ersten und zweiten Befestigungseinheit (1110, 1120) befindet,
- Verschwenken der Hebevorrichtung (1000) um einen Winkel (α) nach außen.

## Claims

1. A lifting device (1000) for lifting components of a wind turbine (100), having
a first section (1100),
at least a first and second fastening unit (1110, 1120) in each case for fastening a component (1500, 1502) of the wind turbine (100) and
a first arm (1200) having a plurality of bores (1004 - 1008),
wherein the bores (1004 - 1008) are provided along the first arm (1200) at different distances relative to the first and second fastening unit (1110, 1120),
a second and third arm (1111, 1112), each being provided with a first part (1113) of the first and second fastening unit (1110, 1120), and
a bottom unit (1300), which has two second parts (1314) of the first and second fastening unit (1110, 1120),
wherein the two second parts (1314) are pivotably provided on the bottom unit (1300) and have an operating position and a transport position,
wherein the first, second and third arm (1200, 1111, 1112) and the bottom unit (1300) are attached to the first section (1100).

2. The lifting device according to claim 1, wherein
the first arm (1200) is at least partially or in sections arranged at an angle relative to the first and second fastening unit (1110, 1120).

3. The lifting device according to one of claims 1 or 2, further having
a carriage (1400), which can be secured in one of the plurality of the bores (1004 - 1008),
wherein the carriage (1400) has a tab or eye (1410) for accommodating a crane hook.

4. The lifting device according to one of claims 1 to 3, wherein
the first arm (1200) has a first straight and a second angled section (1134, 1200).

5. The lifting device according to one of claims 1 to 4, wherein
the first and second fastening unit (1110, 1120) are arranged substantially parallel to one another.

6. A method for assembling components of a wind turbine to the wind turbine by means of a lifting device according to one of claims 1 to 5, comprising at least a first and second fastening unit (1110, 1120) in each case for fastening a component (1500, 1502) of the wind turbine (100) and
a first arm (1200) having a plurality of bores (1004 - 1008),
wherein the bores (1004 - 1008) are provided along the first arm (1200) at different distances relative to the first and second fastening unit (1110, 1120),
a carriage (1400), which can be secured in one of the plurality of the bores (1004 - 1008),
wherein the first, second and third arm (1200, 1111, 1112) and the bottom unit (1300) are attached to the first section (1100), with the steps:
- fastening at least a first and second component (1500, 1502) of the wind turbine (100) to the at least first and second fastening unit (1110, 1120) of the lifting device (1000),
- locking the carriage (1400) in one of the plurality of bores, so that a crane hook, which is fastened to the carriage (1400), is oriented substantially perpendicular to the first and second fastening unit (1110, 1120),
- fastening one of the components (1500, 1502) of the wind turbine (100), which is fastened to the first or second fastening unit (1110, 112), to a first rotor hub connection, which is in the 3 o'clock position,
- releasing the components (1500, 1502) of the wind turbine (100) from the first or second fastening unit (1110, 1120),
- displacing the carriage (1400) and locking the carriage (1400) in a further bore, which is located between the first and second fastening unit (1110, 1120),
- pivoting the lifting device (1000) about an angle (α) to the outside,
- lifting, rotating and displacing the lifting device (1000), so that the second component (1500) of the wind turbine (100), which is still fastened to the first or second fastening unit (1110, 1120), can be fastened to a second rotor hub connection,
- fastening the component of the wind turbine (100), which is still fastened to the lifting device (1000), to the second rotor hub connection, and
- releasing the components (1500, 1502) of the wind turbine from the first or second fastening unit (1110, 1120).

7. A method for assembling components of a wind turbine to the wind turbine by means of a lifting device according to one of the claims 1 to 5,comprising at least a first and second fastening unit (1110, 1120) in each case for fastening a component (1500, 1502) of the wind turbine (100) and
a first arm (1200) having a plurality of bores (1004 - 1008),
wherein the bores (1004 - 1008) are provided along the first arm (1200) at different distances relative to the first and second fastening unit (1110, 1120) and a carriage (1400), which can be secured in one of the plurality of the bores (1004 - 1008), wherein the first, second and third arm (1200, 1111, 1112) and the bottom unit (1300) are attached to the first section (1100), with the steps:
- fastening at least a first and second component (1500, 1502) of the wind turbine (100) to the at least first and second fastening unit (1110, 1120) of the lifting device (1000),
- locking the carriage (1400) in one of the plurality of bores (1008), so that a crane hook, which is fastened to the carriage (1400) is oriented substantially at an angle of 30° relative to the first and second fastening unit (1110, 1120),
- lifting the lifting device (1000),
- fastening one of the components (1500, 1502) of the wind turbine, which is fastened to the first or second fastening unit (1110, 112), to a first rotor hub connection, which is in the 11 o'clock position,
- displacing the rotor hub, so that the lifting device (1000) is in the 9 o'clock position
- releasing the components (1500, 1502) of the wind turbine (100) from the first or second fastening unit (1110, 1120),
- displacing the carriage (1400) and locking the carriage (1400) in a further bore, which is located between the first and second fastening unit (1110, 1120),
- pivoting the lifting device (1000) about an angle (α) to the outside.

## Revendications

1. Dispositif de levage (1000) permettant le levage d'éléments d'une éolienne (100), avec
une première partie (1100),
au moins une première et une deuxième unité de fixation (1110, 1120) permettant respectivement la fixation d'un élément (1500, 1502) de l'éolienne (100), et
un premier bras (1200) avec une pluralité de trous (1004 - 1008),
dans lequel les trous (1004 - 1008) sont prévus le long du premier bras (1200) à intervalles différents par rapport à la première et la deuxième unité de fixation (1110, 1120) ;
un deuxième et un troisième bras (1111, 1112), sur lesquels est prévue respectivement une première partie (1113) de la première et la deuxième unité de fixation (1110, 1120), et
une unité fond (1300), laquelle présente deux deuxièmes parties (1314) de la première et la deuxième unité de fixation (1110, 1120),
dans lequel les deux deuxièmes parties (1314) sont prévues sur l'unité fond (1300) de manière pivotante et présentent une position de fonctionnement et une position de transport,
dans lequel les premier, deuxième et troisième bras (1200, 1111, 1112) et l'unité fond (1300) sont fixés sur la première partie (1100).

2. Dispositif de levage selon la revendication 1, dans lequel
le premier bras (1200) est disposé au moins en partie ou sur certaines parties selon un angle par rapport à la première et la deuxième unité de fixation (1110, 1120).

3. Dispositif de levage selon l'une quelconque des revendications 1 ou 2, en outre avec
un coulisseau (1400), qui peut être immobilisé dans un de la pluralité des trous (1004 - 1008),
dans lequel le coulisseau (1400) présente une languette ou un œillet (1410) permettant la réception d'un crochet de grue.

4. Dispositif de levage selon l'une quelconque des revendications 1 à 3, dans lequel
le premier bras (1200) présente une première partie rectiligne et une deuxième partie coudée (1134, 1200).

5. Dispositif de levage selon l'une quelconque des revendications 1 à 4, dans lequel
les première et deuxième unités de fixation (1110, 1120) sont disposées sensiblement parallèlement l'une à l'autre.

6. Procédé permettant le montage d'éléments d'une éolienne sur l'éolienne au moyen d'un dispositif de levage selon l'une quelconque des revendications 1 à 5 avec au moins une première et une deuxième unité de fixation (1110, 1120) permettant respectivement la fixation d'un élément (1500, 1502) de l'éolienne (100), et un premier bras (1200) avec une pluralité de trous (1004 - 1008), dans lequel les trous (1004 - 1008) sont prévus le long du premier bras (1200) à intervalles différents par rapport à la première et la deuxième unité de fixation (1110, 1120), et un coulisseau (1400), qui peut être immobilisé dans un de la pluralité des trous (1004 - 1008), dans lequel les premier, deuxième et troisième bras (1200, 1111, 1112) et l'unité fond (1300) sont fixés sur la première partie (1100), avec les étapes :
- de fixation d'au moins un premier et un deuxième élément (1500, 1502) de l'éolienne (100) sur les au moins première et deuxième unités de fixation (1110, 1120) du dispositif de levage (1000),
- de blocage du coulisseau (1400) dans un de la pluralité des trous (1004), de sorte qu'un crochet de grue fixé sur le coulisseau (1400) est orienté sensiblement perpendiculairement à la première et la deuxième unité de fixation (1110, 1120),
- de fixation d'un des éléments (1500, 1502) de l'éolienne (100), lequel est fixé sur la première ou deuxième unité de fixation (1110, 112), sur un premier raccord de moyeu de rotor qui se trouve dans la position de 3 heures,
- de détachement des éléments (1500, 1502) de l'éolienne (100) de la première ou deuxième unité de fixation (1110, 1120),
- de déplacement du coulisseau (1400) et de blocage du coulisseau (1400) dans un autre trou, lequel se trouve entre la première et la deuxième unité de fixation (1110, 1120),
- de pivotement du dispositif de levage (1000) autour d'un angle (α) vers l'extérieur,
- de levage, de rotation et de déplacement du dispositif de levage (1000), de sorte que le deuxième élément (1500) de l'éolienne (100), lequel est encore fixé sur la première ou deuxième unité de fixation (1110, 1120), peut être fixé sur un deuxième raccord de moyeu de rotor,
- de fixation de l'élément de l'éolienne (100) encore fixé sur le dispositif de levage (1000) sur le deuxième raccord de moyeu de rotor, et
- de détachement des éléments (1500, 1502) de l'éolienne de la première ou deuxième unité de fixation (1110, 1120).

7. Procédé permettant le montage d'éléments d'une éolienne sur l'éolienne au moyen d'un dispositif de levage selon l'une quelconque des revendications 1 à 5 avec au moins une première et une deuxième unité de fixation (1110, 1120) permettant respectivement la fixation d'un élément (1500, 1502) de l'éolienne (100), et un premier bras (1200) avec une pluralité de trous (1004 - 1008), dans lequel les trous (1004 - 1008) sont prévus le long du premier bras (1200) à intervalles différents par rapport à la première et la deuxième unité de fixation (1110, 1120), et un coulisseau (1400), qui peut être immobilisé dans un de la pluralité des trous (1004 - 1008), dans lequel les premier, deuxième et troisième bras (1200, 1111, 1112) et l'unité fond (1300) sont fixés sur la première partie (1100), avec les étapes :
- de fixation d'au moins un premier et un deuxième élément (1500, 1502) de l'éolienne (100) sur les au moins première et deuxième unités de fixation (1110, 1120) du dispositif de levage (1000),
- de blocage du coulisseau (1400) dans un de la pluralité des trous (1008), de sorte qu'un crochet de grue fixé sur le coulisseau (1400) est orienté sensiblement selon un angle de 30° par rapport à la première et la deuxième unité de fixation (1110, 1120),
- de levage du dispositif de levage (1000),
- de fixation d'un des éléments (1500, 1502) de l'éolienne, lequel est fixé sur la première ou deuxième unité de fixation (1110, 112), sur un premier raccord de moyeu de rotor qui se trouve dans la position de 11 heures,
- de déplacement du moyeu de rotor, de sorte que le dispositif de levage (1000) se trouve dans la position de 9 heures
- de détachement des éléments (1500, 1502) de l'éolienne de la première ou deuxième unité de fixation (1110, 1120),
- de déplacement du coulisseau (1400) et de blocage du coulisseau (1400) dans un autre trou, lequel se trouve entre la première et la deuxième unité de fixation (1110, 1120),
- de pivotement du dispositif de levage (1000) autour d'un angle (α) vers l'extérieur,
